# EUROPEAN PATENT APPLICATION

(11) **EP 3 993 465 A1**
(43) Date of publication of application: **04.05.2022**
(21) Application number: 20841451.6
(22) Date of filing: 14.07.2020
(51) Int. Cl.: H04W 8/22

(54) **METHOD AND APPARATUS FOR DATA TRANSMISSION UNDER NETWORK SLICE ARCHITECTURE**

(30) Priority: 18.07.2019 CN 201910651052
(71) Applicant: Huawei Technologies Co., Ltd., Longgang Shenzhen, Guangdong 518129 (CN)
(72) Inventor: HUANG, Qufang, Shenzhen, Guangdong 518129 (CN); ZENG, Qinghai, Shenzhen, Guangdong 518129 (CN)
(74) Representative: Maiwald Patent- und Rechtsanwaltsgesellschaft mbH
(86) International application number: PCT/CN2020/101829
(87) International publication number: WO 2021/008515

(57) **Abstract**

This application provides a data transmission method and apparatus. The method and the apparatus may be applied to a network slice architecture. The method includes: A terminal sends, to an access network device, first data and indication information used to indicate a first slice corresponding to the first data, and the access network device may determine, based on a mapping relationship between a slice and a tunnel, a first tunnel corresponding to the first slice. In other words, different slices may correspond to different tunnels, that is, data corresponding to different slices may be transmitted through different tunnels. In this way, the access network device can reduce congestion caused because data is simultaneously transmitted through a same tunnel for communication, thereby helping improve communication efficiency.

## Description

This application claims priority to Chinese Patent Application No. 201910651052.8, filed with the China National Intellectual Property Administration on July 18, 2019 and entitled "DATA TRANSMISSION METHOD AND APPARATUS IN NETWORK SLICE ARCHITECTURE", which is incorporated herein by reference in its entirety.

### TECHNICAL FIELD

This application relates to the communication field, and more specifically, to a data transmission method and apparatus.

### BACKGROUND

In an existing communication network of the 3rd generation partnership project (the 3rd generation partnership project, 3GPP), only a terminal on which network identity authentication has succeeded can use a network of the 3GPP to transmit data. For example, a terminal is bound to a subscriber identity module (subscriber identity module, SIM) card. When the SIM card is sold, an operator has recorded information about the SIM card in a home subscriber server (home user server, HSS) network element of the operator. After accessing a wireless network, the terminal shows unique information in the SIM card of the terminal to the wireless network. After obtaining the unique information, the wireless network asks the HSS whether the terminal is a legal terminal. If a positive answer is obtained, the wireless network establishes a bearer for the terminal to provide a data transmission service. If a negative answer is obtained, the wireless network intelligently provides a limited service for the terminal, for example, a service of dialing a special number such as 119 or 110, and rejects to provide other services.

Specifically, after establishing a radio resource control (radio resource control, RRC) connection to an access network device, the terminal may send an identifier of the terminal to an access and mobility management function (access and mobility management function, AMF) through the access network device. The identifier of the terminal may be an identifier of the SIM card in the terminal. In addition, the AMF also needs to send an authentication request to the terminal, so that the terminal determines, based on the authentication request, whether the network is legal. The terminal sends a response message of the authentication request to the AMF, so that the AMF learns whether the terminal is legal. If the terminal is an illegal terminal, the network does not provide a data transmission service for the terminal.

In a 5G network, a "network slice" is introduced, that is, different network resources (which may be referred to as "slice resources") are reserved to serve different types of specific services. In this architecture, a problem of how to transmit data to help improve data transmission efficiency is urgently needs to be resolved.

### SUMMARY

This application provides a data transmission method and apparatus, to help improve data transmission efficiency.

According to a first aspect, a data transmission method is provided. The method is applied to a terminal or a chip in the terminal, and the method includes: obtaining slice information, where the slice information is slice information of a slice corresponding to data; sending the data to an access network device; and sending indication information to the access network device, where the indication information is used to indicate the slice corresponding to the data.

The terminal sends, to the access network device, the data and the indication information used to indicate the slice corresponding to the data, so that the access network device may determine, based on a mapping relationship, a first tunnel corresponding to the slice. In other words, different slices may correspond to different tunnels, that is, data corresponding to different slices may be transmitted through different tunnels. In this embodiment of this application, the access network device can reduce congestion caused because data is simultaneously transmitted through a same tunnel for communication, thereby helping improve communication efficiency.

In some possible implementations, the indication information includes the slice information of the slice corresponding to the data.

The terminal may explicitly indicate the slice information of the slice by using the indication information. In this way, the access network device can directly learn of the slice corresponding to the data, and then can perform tunnel selection based on the slice, thereby improving communication efficiency.

In some possible implementations, the indication information includes a data type of the data.

The terminal may implicitly indicate the slice information of the slice by using the data type of the data. In this way, the access network device can indirectly determine the slice corresponding to the data, and then can perform tunnel selection based on the slice, thereby improving communication efficiency.

In some possible implementations, the indication information includes identification information of the terminal.

The terminal may implicitly indicate the slice information of the slice by using the identification information of the terminal. In this way, the access network device can indirectly determine the slice corresponding to the data, and then can perform tunnel selection based on the slice, thereby improving communication efficiency.

In some possible implementations, the method further includes: receiving resource information, where the resource information is used to indicate an uplink resource of the terminal, and the resource information is encrypted resource information; and obtaining, based on a first key, the uplink resource indicated by the resource information; and the sending the data to an access network device includes: sending the data to the access network device on the uplink resource.

The uplink resource required by the terminal to send the data to the access network device may be obtained from the resource information. If the uplink resource indicated by the resource information is encrypted, the terminal needs to parse the uplink resource from the resource information based on a key learned of by the terminal, and sends the data to the access network device by using the uplink resource. In other words, the terminal cannot obtain the uplink resource if the resource information is not allocated to the terminal. In this way, an attack of a malicious terminal can be avoided, and communication security performance is improved.

In some possible implementations, the method further includes: sending an identification code of the terminal, where the identification code corresponds to the uplink resource of the terminal.

The first identification code may be used to identify a terminal, or may be used to identify a resource. To be specific, there is a correspondence between the identification code and the terminal, or there may be a correspondence between the identification code and the uplink resource. For example, the uplink resource is numbered, and different uplink resources correspond to different numbers. In this way, the access network device may determine whether the first identification code is in an identification code list. If the first identification code is in the identification code list, the access network device sends the resource information to the terminal. If the first identification code is not in the identification code list, the access network device does not send the resource information to the terminal. Therefore, in this application, the attack of the malicious terminal can be avoided, and network security performance is improved.

In some possible implementations, the sending the data to an access network device includes: sending a data packet to the access network device, where the data packet includes the data and identification information of the terminal.

The identification information of the terminal may be an ID of the terminal, or may be an Internet Protocol (Internet Protocol, IP) address of the terminal, or may be other information that can uniquely identify the terminal, or may be the foregoing identification code. When the data packet is transmitted to the access network device in an uplink direction, the access network device may determine, based on the identification information of the terminal in the data packet, whether data content (that is, first data) in the data packet is legal. If the data content is legal, the access network device sends the data packet to a core network element. If the data content is illegal, the access network device does not send the data packet to a core network element. Therefore, in this embodiment of this application, a malicious attack behavior may be limited to an access network, and does not spread to the core network element, thereby improving network security performance.

According to a second aspect, a data transmission method is provided. The method is applied to a terminal or a chip in the terminal, and the method includes: obtaining slice information, where the slice information is slice information of a slice corresponding to data; and sending the data to an access network device on a resource corresponding to the slice.

The terminal may implicitly indicate the slice corresponding to the data, that is, the terminal sends the data on the resource corresponding to the slice. In this way, the access network device can determine, by using the resource for receiving the data, a tunnel corresponding to the slice. For example, there is a second mapping relationship between a resource for transmitting data and a slice, and there is a first mapping relationship between a slice and a tunnel. Therefore, after receiving first data on a first resource, the access network device may determine, based on the first resource and the second mapping relationship, a first slice corresponding to the first resource, determine, based on the first slice and the first mapping relationship, a first tunnel corresponding to the first slice, and then send the data to a core network element through the first tunnel. In other words, the terminal implicitly indicates the slice corresponding to the data, so that air interface resource overheads can be reduced relative to an explicit indication.

In some possible implementations, the method further includes: receiving resource information, where the resource information is used to indicate an uplink resource of the terminal, and the resource information is encrypted resource information; obtaining, based on a key, the uplink resource indicated by the resource information; and determining the uplink resource indicated by the resource information as the resource corresponding to the slice.

The uplink resource required by the terminal to send the data to the access network device may be obtained from the resource information. If the uplink resource indicated by the resource information is encrypted, the terminal needs to parse the uplink resource from the resource information based on the key learned of by the terminal, and sends the data to the access network device by using the uplink resource. In other words, the terminal cannot obtain the uplink resource if the resource information is not allocated to the terminal. In this way, an attack of a malicious terminal can be avoided, and communication security performance is improved.

In some possible implementations, the method further includes: sending an identification code of the terminal, where the identification code corresponds to the uplink resource of the terminal.

The first identification code may be used to identify a terminal, or may be used to identify a resource. To be specific, there is a correspondence between the identification code and the terminal, or there may be a correspondence between the identification code and the uplink resource. For example, the uplink resource is numbered, and different uplink resources correspond to different numbers. In this way, the access network device may determine whether the first identification code is in an identification code list. If the first identification code is in the identification code list, the access network device sends the resource information to the terminal. If the first identification code is not in the identification code list, the access network device does not send the resource information to the terminal. Therefore, in this application, the attack of the malicious terminal can be avoided, and network security performance is improved.

In some possible implementations, the sending the data to an access network device includes: sending a data packet to the access network device, where the data packet includes the data and identification information of the terminal.

When the data packet is transmitted to the access network device in an uplink direction, the access network device may determine, based on the identification information of the terminal in the data packet sent by the terminal, whether data content (that is, first data) in the data packet is legal. If the data content is legal, the access network device sends the data packet to the core network element. If the data content is illegal, the access network device does not send the data packet to the core network element. Therefore, in this embodiment of this application, a malicious attack behavior may be limited to the access network device, and does not spread to the core network element, thereby improving network security performance.

According to a third aspect, a data transmission method is provided. The method is applied to an access network device or a chip in the access network device, and the method includes: receiving first data from a terminal; determining a first tunnel based on a first mapping relationship and a first slice, where the first mapping relationship is a mapping relationship between at least one slice and at least one tunnel, the at least one tunnel is a tunnel between the access network device and a core network element, and the first slice is a slice corresponding to the first data; and sending the first data to the core network element through the first tunnel.

The access network device receives the first data from the terminal, where the first data corresponds to the first slice. The access network device determines, based on the first mapping relationship, the first tunnel corresponding to the first slice. In other words, different slices may correspond to different tunnels, that is, data corresponding to different slices may be transmitted through different tunnels. In this embodiment of this application, the access network device can avoid congestion caused because data is simultaneously transmitted through a same tunnel for communication, thereby improving communication efficiency.

In some possible implementations, the receiving first data from a terminal includes: receiving the first data from the terminal on a first resource. That the first slice is a slice corresponding to the first data is specifically that the first slice is determined based on a second mapping relationship and the first resource, and the second mapping relationship is a mapping relationship between at least one resource and at least one slice.

The access network device can determine, by using a resource for receiving data, a tunnel corresponding to the slice. For example, there is a second mapping relationship between a resource for transmitting data and a slice, and there is a first mapping relationship between a slice and a tunnel. Therefore, after receiving the first data on the first resource, the access network device may determine, based on the first resource and the second mapping relationship, the first slice corresponding to the first resource, determine, based on the first slice and the first mapping relationship, the first tunnel corresponding to the first slice, and then send the data to the core network element through the first tunnel. In other words, different slices may correspond to different tunnels, that is, data corresponding to different slices may be transmitted through different tunnels, to avoid congestion caused because data is simultaneously transmitted through a same tunnel for communication, and improve communication efficiency.

In some possible implementations, the method further includes: receiving indication information, where the indication information is used to indicate the first slice corresponding to the first data. That the first slice is a slice corresponding to the first data is specifically that the first slice is determined based on the indication information.

The access network device receives the data from the terminal and the indication information used to indicate the slice corresponding to the data, and determines, based on the mapping relationship, the first tunnel corresponding to the slice. In other words, different slices may correspond to different tunnels, that is, data corresponding to different slices may be transmitted through different tunnels. In this embodiment of this application, the access network device can avoid congestion caused because data is simultaneously transmitted through a same tunnel for communication, thereby improving communication efficiency.

In some possible implementations, the indication information includes slice information of the first slice corresponding to the first data.

The indication information may directly indicate the first slice corresponding to the first data. In this way, the access network device can directly learn of the slice corresponding to the data, and then can perform tunnel selection based on the slice, thereby improving communication efficiency.

In some possible implementations, the indication information includes identification information of the terminal.

There is a correspondence between the identification information of the terminal and the slice. In this way, the access network device determines, based on the correspondence and the identification information of the terminal that sends the first data, the first slice corresponding to the first data. In this way, the access network device can indirectly learn of the slice corresponding to the data, and then can perform tunnel selection based on the slice, thereby improving communication efficiency.

In some possible implementations, the indication information includes a data type of the first data.

The indication information may implicitly indicate the first slice corresponding to the first data. For example, there is a correspondence between a data type and a slice. In this way, the access network device may determine, based on the data type of the first data and the correspondence, the first slice corresponding to the first data. In this way, the access network device can indirectly learn of the slice corresponding to the data, and then can perform tunnel selection based on the slice, thereby improving communication efficiency.

In some possible implementations, the method further includes: sending first resource information to a first network element, where the first resource information is used to indicate an uplink resource of the terminal; receiving second resource information from the first network element, where the second resource information is obtained after the first network element encrypts the first resource information; and sending the second resource information to the terminal.

The access network device may further send resource information to the first network element, and the first network element encrypts the resource information, and returns the encrypted resource information to the access network device. The access network device sends the second resource information to the terminal, and the terminal needs to parse the uplink resource from the resource information based on a key learned of by the terminal, and sends the first data to the access network device by using the first resource. In other words, the terminal cannot obtain the uplink resource if the resource information is not allocated to the terminal. In this way, an attack of a malicious terminal can be avoided, and communication security performance is improved.

In some possible implementations, the first network element is an access and mobility management function AMF or an application server.

The access network device generates the first resource information, and sends the first resource information to the AMF. The AMF obtains a key from a server, and encrypts the first resource information by using the key, to obtain the second resource information. The access network device receives the second resource information sent by the AMF, and sends the second resource information to the terminal.

In some possible implementations, the method further includes: receiving a key; generating resource information based on the key, where the resource information is used to indicate an uplink resource of the terminal, and the third resource information is resource information encrypted by using the key; and sending the resource information to the terminal.

The access network device generates the first resource information, and transparently transmits the first resource information to the server through the AMF. The server encrypts the first resource information by using the key to obtain second resource information, and transparently transmits the second resource information to the access network device through the AMF. The access network device sends the second resource information to the terminal.

In some possible implementations, the method further includes: receiving a first identification code of the terminal from the terminal; obtaining an identification code list, where the identification code list includes at least one identification code; and when the identification code list includes the first identification code, sending resource information to the terminal, where the resource information is used to indicate an uplink resource of the terminal.

The first identification code may be used to identify the terminal or identify a slice. For example, there is a correspondence between an identification code and a terminal, or there is a correspondence between an identification code and a slice. The access network device may determine whether the first identification code is in the identification code list. If the first identification code is in the identification code list, the access network device sends the resource information to the terminal. If the first identification code is not in the identification code list, the access network device does not send the resource information to the terminal. Therefore, in this application, the attack of the malicious terminal can be avoided, and network security performance is improved.

In some possible implementations, the receiving first data from a terminal includes: receiving a data packet from the terminal, where the data includes the first data and the identification information of the terminal; and the sending the first data to the core network element through the first tunnel includes: when determining, based on the identifier of the terminal, that the terminal is legal, sending the first data to the core network element through the first tunnel.

The identification information of the terminal may be an ID of the terminal, or may be an IP address of the terminal, or may be other information that can uniquely identify the terminal, or may be the foregoing identification code. When the data packet is transmitted to the access network device in an uplink direction, the access network device may determine, based on the identification information of the terminal in the data packet, whether data content (that is, the first data) in the data packet or the terminal is legal. If the data content is legal, the access network device sends the data packet to the core network element. If the data content is illegal, the access network device does not send the data packet to the core network element. Therefore, in this embodiment of this application, a malicious attack behavior may be limited to the access network device, and does not spread to the core network element, thereby improving network security performance.

In some possible implementations, the method further includes: receiving second data within a preset time interval, where the second data corresponds to the first slice; and the sending the first data to the core network element through the first tunnel includes: simultaneously sending the first data and the second data through the first tunnel when the preset time interval expires.

The access network device may preset the preset time interval, and within the preset time interval, the access network device may uniformly collect one or more pieces of received data corresponding to a same slice, and locally store the received data; and simultaneously send the one or more pieces of data to the core network element when the preset time interval expires. In this way, relative to a case in which the access network device immediately sends data to the core network element after receiving the data from the terminal, power consumption overheads of the access network device are reduced, and implementation of the application server is simplified.

In some possible implementations, the method further includes: receiving third data, where a first data packet identifier of the third data is the same as a first data packet identifier of the first data, and the first data packet identifier is a data packet identifier allocated by the access network device; and sending the third data to the terminal, where the terminal is a terminal corresponding to a first terminal identifier, the first terminal identifier is determined based on the first data packet identifier of the third data and a third mapping relationship, and the third mapping relationship is a mapping relationship between at least one first data packet identifier and at least one terminal identifier.

The access network device may allocate a data packet identifier to data. If detecting that a data packet identifier of one piece of received data (that is, the first data) is the same as a data packet identifier of one piece of to-be-sent data (the third data), the access network device may send the third data to a transmit end of the first data. That is, bidirectional data transmission is used to send downlink data to a terminal that sends uplink data.

In some possible implementations, the method further includes: receiving third data; and sending the third data to the terminal, where a source address of the third data is a destination address of the first data, and a destination address of the third data is a source address of the first data.

Alternatively, the access network device may determine, based on a source address and a destination address of the data, a receive end of the to-be-sent third data. For example, if detecting that a destination address of one piece of received data (that is, the first data) is the same as a source address of one piece of to-be-sent data (the third data) and the source address of the first data is the same as the destination address of the third data, the access network device may send the third data to a transmit end of the first data. That is, bidirectional data transmission is used to send downlink data to a terminal that sends uplink data.

According to a fourth aspect, a data transmission method is provided. The method includes: receiving first data from an access network device through a first tunnel, where the first data corresponds to a first slice, the first tunnel is determined based on the first slice and a first mapping relationship, and the first mapping relationship is a mapping relationship between at least one slice and at least one tunnel between the access network device and a core network element; and sending the first data to an application server through a second tunnel, where the second tunnel is determined based on the first slice and a fourth mapping relationship, and the fourth mapping relationship is a mapping relationship between at least one slice and at least one tunnel between the core network element and at least one application server.

The core network element can reach different application servers through different tunnels. The core network element may select a corresponding tunnel based on a slice, and then forward, to an application server corresponding to the terminal, data sent by a terminal.

In some possible implementations, the method further includes: receiving fourth data from the application server; and sending the fourth data to the access network device through a third tunnel.

The access network device receives an uplink data packet from the terminal, and transmits the uplink data packet to the core network element. The access network device allocates a data packet identifier (referred to as a "first data packet identifier" below) to the uplink data packet. When the uplink data packet is sent, the uplink data packet carries the first data packet identifier. For example, the first data packet identifier is SN1. The access network device stores "SN1 and an identifier of the terminal (for example, a UE ID)". When receiving the data packet, the core network element allocates a second data packet identifier SN2 to the data packet, and stores a combination of three fields "SN1+SN2+gNB ID". The core network element includes the second data packet identifier SN2 in the uplink data packet, and sends the uplink data packet to the server. When sending a downlink data packet to the terminal that sends the uplink data packet, the server includes the second data packet identifier SN2 allocated by the core network element that sends the uplink data packet in the downlink data packet. After receiving the downlink data packet (where the downlink data packet includes fifth data), the core network element may determine, based on "SN1+SN2+gNB ID" stored by the core network element, an access network device that corresponds to the gNB ID and to which the downlink data packet is to be transmitted.

In some possible implementations, when a source address of the fourth data is a destination address of the first data, and a destination address of the fourth data is a source address of the first data, the first tunnel is the third tunnel.

The core network element may determine the access network device based on the source address and the destination address of the fourth data. For example, the core network element detects that the source address of the fourth data is the same as the destination address of the first data and the destination address of the fourth data is the same as the source address of the first data. In this way, the core network element may send the fourth data to the access network device that sends the first data. In addition, the core network element may further determine the third tunnel from a plurality of tunnels between the core network element and the access network device based on the source address and the destination address of the fourth data, and send the fourth data to the access network device through the third tunnel.

In some possible implementations, when a first data packet identifier of the fourth data is the same as a first data packet identifier of the first data, the first tunnel is the third tunnel, and the first data packet identifier is a data packet identifier allocated by the access network device.

The downlink data packet selects a tunnel used for uplink data packet transmission from a plurality of tunnels between the core network element and the access network device to send the downlink data packet to the access network device (where the downlink data packet includes the fourth data and the first data packet identifier (for example, SN1)). The access network device receives the downlink data packet, and determines, based on the "SN1 and the UE ID" stored by the access network device, to transmit the downlink data packet (where the downlink data packet includes the third data) to the terminal corresponding to the UE ID.

In some possible implementations, the access network device is an access network device corresponding to an access network device identifier, the access network device identifier is determined based on the first data packet identifier of the fourth data and a fifth mapping relationship, and the fifth mapping relationship is a mapping relationship between at least one first data packet identifier and at least one access network device identifier.

That the core network element determines the access network device based on the data packet identifier of the fourth data may be specifically that the core network element determines, based on the data packet identifier of the fourth data and the fifth mapping relationship, the access network device identifier corresponding to the first data packet identifier of the fourth data, where the fifth mapping relationship may be the mapping relationship between the at least one first data packet identifier and the at least one access network device identifier. In this way, the core network element may send the fourth data to the access network device corresponding to the access network device identifier.

According to a fifth aspect, a data transmission apparatus is provided. The apparatus may be a terminal, or may be a chip in the terminal. The apparatus has a function of implementing the first aspect and the possible implementations thereof. The function may be implemented by hardware, or may be implemented by hardware executing corresponding software. The hardware or the software includes one or more modules corresponding to the function.

In a possible design, the apparatus includes a transceiver module and a processing module. The transceiver module may be, for example, at least one of a transceiver, a receiver, or a transmitter. The transceiver module may include a radio frequency circuit or an antenna. The processing module may be a processor. Optionally, the apparatus further includes a storage module, and the storage module may be, for example, a memory. When the apparatus includes the storage module, the storage module is configured to store instructions. The processing module is connected to the storage module, and the processing module may execute the instructions stored in the storage module or instructions from another module, so that the apparatus performs the communication method according to any one of the first aspect and the possible implementations thereof. In this design, the apparatus may be a terminal.

In another possible design, when the apparatus is a chip, the chip includes a transceiver module and a processing module. The transceiver module may be, for example, an input/output interface, a pin, or a circuit on the chip. The processing module may be, for example, a processor. The processing module may execute instructions, so that the chip in the terminal performs the communication method according to any one of the first aspect and the possible implementations thereof. Optionally, the processing module may execute instructions in a storage module, and the storage module may be a storage module in the chip, for example, a register or a cache. The storage module may alternatively be located inside a communication device but located outside the chip, for example, a read-only memory (read-only memory, ROM) or another type of static storage device that can store static information and instructions, or a random access memory (random access memory, RAM).

The processor mentioned above may be a general-purpose central processing unit (CPU), a microprocessor, an application specific integrated circuit (application-specific integrated circuit, ASIC), or one or more integrated circuits configured to control program execution of the communication method according to the foregoing aspects.

According to a sixth aspect, a data transmission apparatus is provided. The apparatus may be a terminal, or may be a chip in the terminal. The apparatus has a function of implementing the second aspect and the possible implementations thereof. The function may be implemented by hardware, or may be implemented by hardware executing corresponding software. The hardware or the software includes one or more modules corresponding to the function.

In a possible design, the apparatus includes a transceiver module and a processing module. The transceiver module may be, for example, at least one of a transceiver, a receiver, or a transmitter. The transceiver module may include a radio frequency circuit or an antenna. The processing module may be a processor.

Optionally, the apparatus further includes a storage module, and the storage module may be, for example, a memory. When the apparatus includes the storage module, the storage module is configured to store instructions. The processing module is connected to the storage module, and the processing module may execute the instructions stored in the storage module or instructions from another module, so that the apparatus performs the method according to any one of the second aspect or the possible implementations thereof.

In another possible design, when the apparatus is a chip, the chip includes a transceiver module and a processing module. The transceiver module may be, for example, an input/output interface, a pin, or a circuit on the chip. The processing module may be, for example, a processor. The processing module may execute instructions, so that the chip in the terminal performs the communication method according to any one of the second aspect and the possible implementations thereof.

Optionally, the processing module may execute instructions in a storage module, and the storage module may be a storage module in the chip, for example, a register or a cache. The storage module may alternatively be located inside a communication device but located outside the chip, for example, a ROM or another type of static storage device that can store static information and instructions, or a RAM

The processor mentioned above may be a CPU, a microprocessor, an application specific integrated circuit ASIC, or one or more integrated circuits configured to control program execution of the communication methods according to the foregoing aspects.

According to a seventh aspect, a data transmission apparatus is provided. The apparatus may be an access network device, or may be a chip in the access network device. The apparatus has a function of implementing the third aspect and the possible implementations thereof. The function may be implemented by hardware, or may be implemented by hardware executing corresponding software. The hardware or the software includes one or more modules corresponding to the function.

In a possible design, the apparatus includes a transceiver module and a processing module. The transceiver module may be, for example, at least one of a transceiver, a receiver, or a transmitter. The transceiver module may include a radio frequency circuit or an antenna. The processing module may be a processor. Optionally, the apparatus further includes a storage module, and the storage module may be, for example, a memory. When the apparatus includes the storage module, the storage module is configured to store instructions. The processing module is connected to the storage module, and the processing module may execute the instructions stored in the storage module or instructions from another module, so that the apparatus performs the communication method according to any one of the third aspect and the possible implementations thereof. In this design, the apparatus may be an access network device.

In another possible design, when the apparatus is a chip, the chip includes a transceiver module and a processing module. The transceiver module may be, for example, an input/output interface, a pin, or a circuit on the chip. The processing module may be, for example, a processor. The processing module may execute instructions, so that the chip in the access network device performs the communication method according to any one of the third aspect and the possible implementations thereof. Optionally, the processing module may execute instructions in a storage module, and the storage module may be a storage module in the chip, for example, a register or a cache. The storage module may alternatively be located inside a communication device but located outside the chip, for example, a ROM or another type of static storage device that can store static information and instructions, or a RAM

The processor mentioned above may be a CPU, a microprocessor, an ASIC, or one or more integrated circuits configured to control program execution of the communication methods according to the foregoing aspects.

According to an eighth aspect, a data transmission apparatus is provided. The apparatus may be a core network element, or may be a chip in the core network element. The apparatus has a function of implementing the fourth aspect and the possible implementations thereof. The function may be implemented by hardware, or may be implemented by hardware executing corresponding software. The hardware or the software includes one or more modules corresponding to the function.

In a possible design, the apparatus includes a transceiver module and a processing module. The transceiver module may be, for example, at least one of a transceiver, a receiver, or a transmitter. The transceiver module may include a radio frequency circuit or an antenna. The processing module may be a processor.

Optionally, the apparatus further includes a storage module, and the storage module may be, for example, a memory. When the apparatus includes the storage module, the storage module is configured to store instructions. The processing module is connected to the storage module, and the processing module may execute the instructions stored in the storage module or instructions from another module, so that the apparatus performs the method according to any one of the fourth aspect or the possible implementations thereof.

In another possible design, when the apparatus is a chip, the chip includes a transceiver module and a processing module. The transceiver module may be, for example, an input/output interface, a pin, or a circuit on the chip. The processing module may be, for example, a processor. The processing module may execute instructions, so that the chip in the core network element performs the communication method according to any one of the fourth aspect and the possible implementations thereof.

Optionally, the processing module may execute instructions in a storage module, and the storage module may be a storage module in the chip, for example, a register or a cache. The storage module may alternatively be located inside a communication device but located outside the chip, for example, a ROM or another type of static storage device that can store static information and instructions, or a RAM

The processor mentioned above may be a CPU, a microprocessor, an ASIC, or one or more integrated circuits configured to control program execution of the communication methods according to the foregoing aspects.

According to a ninth aspect, a computer storage medium is provided. The computer storage medium stores program code, and the program code is used to indicate instructions for performing the method according to any one of the first aspect and the possible implementations thereof.

According to a tenth aspect, a computer storage medium is provided. The computer storage medium stores program code, and the program code is used to indicate instructions for performing the method according to any one of the second aspect and the possible implementations thereof.

According to an eleventh aspect, a computer storage medium is provided. The computer storage medium stores program code, and the program code is used to indicate instructions for performing the method according to any one of the third aspect and the possible implementations thereof.

According to a twelfth aspect, a computer storage medium is provided. The computer storage medium stores program code, and the program code is used to indicate instructions for performing the method according to any one of the fourth aspect and the possible implementations thereof.

According to a thirteenth aspect, a computer program product including instructions is provided. When the computer program product runs on a computer, the computer is enabled to perform the method according to any one of the first aspect or the possible implementations thereof.

According to a fourteenth aspect, a computer program product including instructions is provided. When the computer program product runs on a computer, the computer is enabled to perform the method according to any one of the second aspect or the possible implementations thereof.

According to a fifteenth aspect, a computer program product including instructions is provided. When the computer program product runs on a computer, the computer is enabled to perform the method according to any one of the third aspect or the possible implementations thereof.

According to a sixteenth aspect, a computer program product including instructions is provided. When the computer program product runs on a computer, the computer is enabled to perform the method according to any one of the fourth aspect or the possible implementations thereof.

According to a seventeenth aspect, a communication system is provided. The communication system includes the apparatus according to the fifth aspect, the apparatus according to the seventh aspect, and the apparatus according to the eighth aspect.

According to an eighteenth aspect, a communication system is provided. The communication system includes:
a processing module, configured to obtain slice information, where the slice information is slice information of a slice corresponding to data; and
a transceiver module, configured to send the data to an access network device.

The transceiver module is further configured to send indication information to the access network device, where the indication information is used to indicate the slice corresponding to the data.

The processing module is further configured to determine a first tunnel based on a first mapping relationship and a first slice, where the first mapping relationship is a mapping relationship between at least one slice and at least one tunnel, the at least one tunnel is a tunnel between the access network device and a core network element, and the first slice is a slice corresponding to first data.

The transceiver module is further configured to send the first data to the core network element through the first tunnel.

According to a nineteenth aspect, a communication system is provided. The communication system includes the apparatus according to the sixth aspect, the apparatus according to the seventh aspect, and the apparatus according to the eighth aspect.

According to a twentieth aspect, a communication system is provided. The communication system includes:
a transceiver module, configured to obtain slice information, where the slice information is slice information of a slice corresponding to data, where
the transceiver module is further configured to send the data to an access network device on a resource corresponding to the slice; and
a processing module, configured to determine a first tunnel based on a first mapping relationship and a first slice, where the first mapping relationship is a mapping relationship between at least one slice and at least one tunnel, the at least one tunnel is a tunnel between the access network device and a core network element, the first slice is determined based on a second mapping relationship and a first resource, and the second mapping relationship is a mapping relationship between at least one resource and at least one slice.

The transceiver module is further configured to send first data to the core network element through the first tunnel.

Based on the foregoing technical solution, a terminal sends, to the access network device, data and indication information used to indicate a slice corresponding to the data, and the access network device may determine, based on a mapping relationship, the first tunnel corresponding to the first slice. In other words, different slices may correspond to different tunnels, that is, data corresponding to different slices may be transmitted through different tunnels, to avoid congestion caused because data is simultaneously transmitted through a same tunnel for communication, and improve communication efficiency.

### BRIEF DESCRIPTION OF DRAWINGS

FIG. 1 is a schematic diagram of a possible network architecture according to an embodiment of this application;
FIG. 2 is a schematic diagram of another possible network architecture according to an embodiment of this application;
FIG. 3 is a schematic diagram of a network slice according to an embodiment of this application;
FIG. 4 is a schematic flowchart of a data transmission method according to an embodiment of this application;
FIG. 5 is a schematic diagram of a structure of a data packet according to an embodiment of this application;
FIG. 6 is a schematic flowchart of data packet segment transmission according to an embodiment of this application;
FIG. 7 is a schematic flowchart of resource information encryption according to an embodiment of this application;
FIG. 8 is a schematic flowchart of resource information encryption according to another embodiment of this application;
FIG. 9 is a schematic flowchart of resource information encryption according to still another embodiment of this application;
FIG. 10 is a schematic flowchart of a resource allocation method according to an embodiment of this application;
FIG. 11 is a schematic flowchart of a data transmission method according to another embodiment of this application;
FIG. 12 is a schematic flowchart of a data transmission method according to another embodiment of this application;
FIG. 13 is a schematic block diagram of a data transmission apparatus according to an embodiment of this application;
FIG. 14 is a schematic block diagram of a data transmission apparatus according to another embodiment of this application;
FIG. 15 is a schematic diagram of a structure of a data transmission apparatus according to an embodiment of this application;
FIG. 16 is a schematic block diagram of a data transmission apparatus according to another embodiment of this application;
FIG. 17 is a schematic diagram of a structure of a data transmission apparatus according to an embodiment of this application;
FIG. 18 is a schematic block diagram of a data transmission apparatus according to another embodiment of this application;
FIG. 19 is a schematic diagram of a structure of a data transmission apparatus according to an embodiment of this application;
FIG. 20 is a schematic diagram of a structure of a data transmission apparatus according to another embodiment of this application;
FIG. 21 is a schematic diagram of a structure of a data transmission apparatus according to another embodiment of this application;
FIG. 22 is a schematic diagram of a structure of a data transmission apparatus according to another embodiment of this application; and
FIG. 23 is a schematic diagram of a structure of a data transmission apparatus according to another embodiment of this application.

### DESCRIPTION OF EMBODIMENTS

The following describes the technical solutions in this application with reference to the accompanying drawings.

The technical solutions of embodiments of this application may be applied to various communication systems, for example, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a future 5th generation (5th generation, 5G) system, or a new radio (new radio, NR) system.

A terminal in the embodiments of this application may be user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. Alternatively, the terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal in a future 5G network, a terminal in a future evolved public land mobile network (public land mobile network, PLMN), or the like. This is not limited in the embodiments of this application.

An access network device in the embodiments of this application may be a device configured to communicate with the terminal. The access network device may be a base transceiver station (base transceiver station, BTS) in a global system for mobile communications (global system for mobile communications, GSM) system or code division multiple access (code division multiple access, CDMA), may be a NodeB (NodeB, NB) in a wideband code division multiple access (wideband code division multiple access, WCDMA) system, may be an evolved NodeB (evolved NodeB, eNB, or eNodeB) in an LTE system, or may be a radio controller in a cloud radio access network (cloud radio access network, CRAN) scenario. Alternatively, the access network device may be a relay station, an access point, a vehicle-mounted device, a wearable device, an access network device in a future 5G network or an access network device in a future evolved PLMN network, or one or a group of antenna panels (including a plurality of antenna panels) of a base station in a 5G system. Alternatively, the access network device may be a network node that constitutes a gNB or a transmission point, for example, a baseband unit (baseband unit, BBU) or a distributed unit (distributed unit, DU). This is not limited in the embodiments of this application.

In some deployments, the gNB may include a centralized unit (centralized unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the access network device may be a device including one or more of a CU node, a DU node, and an AAU node. In addition, the CU may be an access network device in an access network (radio access network, RAN), or may be an access network device in a core network (core network, CN). This is not limited in this application.

In the embodiments of this application, the terminal or the access network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (which is also referred to as a main memory). An operating system may be any one or more of computer operating systems implementing service processing through a process (process), for example, a Linux operating system, a Unix operating system, an Android operating system, an iOS operating system, and a Windows operating system. The application layer includes applications such as a browser, an address book, word processing software, and instant communication software. In addition, a specific structure of an execution body of a method provided in the embodiments of this application is not specifically limited in the embodiments of this application, provided that a program that records code for the method provided in the embodiments of this application can be run to perform communication according to the method provided in the embodiments of this application. For example, the execution body of the method provided in the embodiments of this application may be the terminal or the access network device, or a functional module, in the terminal or the access network device, that can invoke and execute the program.

In addition, aspects or features of this application may be implemented as a method, an apparatus or a product that uses standard programming and/or engineering technologies. For example, the computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a wireless channel, and various other media that can store, include, and/or carry instructions and/or data.

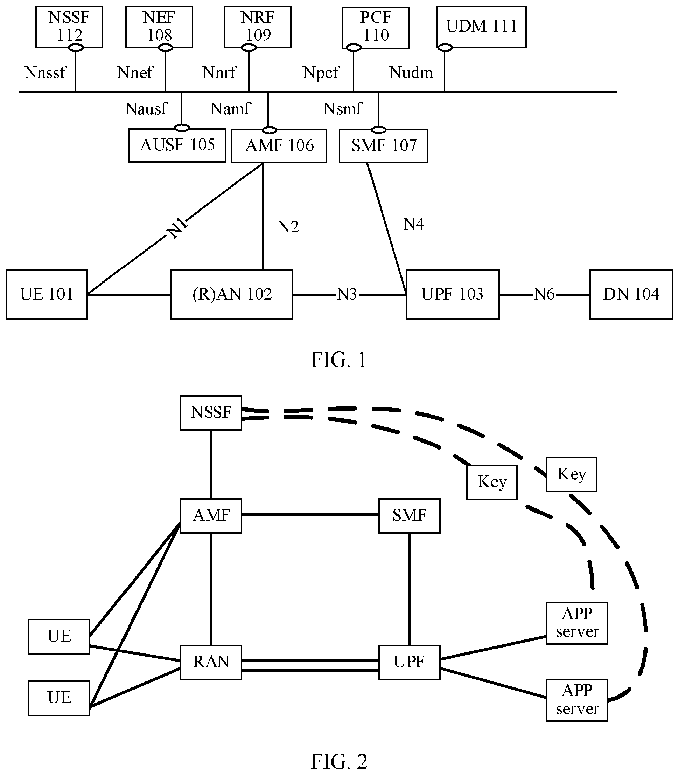

FIG. 1 is a schematic diagram of a possible network architecture according to an embodiment of this application. A 5G network architecture is used as an example. The network architecture includes a terminal 101, a (radio) access network (radio access network, (R)AN) device 102, a user plane function (user plane function, UPF) network element 103, a data network (data network, DN) network element 104, an authentication server function (authentication server function, AUSF) network element 105, an access and mobility management function (access and mobility management function, AMF) network element 106, a session management function (session management function, SMF) network element 107, a network exposure function (network exposure function, NEF) network element 108, a network repository function (network repository function, NRF) network element 109, a policy control function module (policy control function, PCF) network element 110, a unified data management (unified data management, UDM) network element 111, and a network slice selection function (network slice selection function, NSSF) network element 112. In the following, the UPF network element 103, the DN network element 104, the AUSF network element 105, the AMF network element 106, the SMF network element 107, the NEF network element 108, the NRF network element 109, the policy control function (policy control function, PCF) network element 110, the UDM network element 111, and the NSSF network element 112 are referred to as a UPF 103, a DN 104, an AUSF 105, an AMF 106, an SMF 107, a NEF 108, an NRF 109, a PCF 110, a UDM 111, and an NSSF 112 for short.

The terminal 101 mainly accesses a 5G network through a radio air interface and obtains a service. The terminal interacts with a RAN through an air interface, and interacts with an AMF of a core network through non-access stratum (non-access stratum, NAS) signaling. The RAN 102 is responsible for air interface resource scheduling and air interface connection management for the terminal to access a network. The UPF 103 is responsible for forwarding and receiving of user data in the terminal. For example, the UPF may receive user data from a data network and transmit the user data to the terminal through the access network device, or may receive user data from the terminal through the access network device and forward the user data to the data network. A transmission resource and a scheduling function in the UPF 103 that provide a service for the terminal are managed and controlled by the SMF network element. The AUSF 105 is a control plane network element of the core network and is mainly responsible for authentication and authorization of a subscriber to ensure that the subscriber is a legal subscriber. The AMF 106 is a core network element, and is mainly responsible for a signaling processing part, for example, functions such as access control, mobility management, attachment and detachment, and gateway selection. In addition, when providing a service for a session in the terminal, the AMF 106 may further provide a control plane storage resource for the session, to store a session identifier, an SMF network element identifier associated with the session identifier, and the like. The SMF 107 is responsible for user plane network element selection, user plane network element redirection, Internet Protocol (Internet Protocol, IP) address allocation, bearer establishment, modification, and release, and quality of service (quality of service, QoS) control. The NEF 108 is the control plane network element of the core network and is responsible for external exposure of a mobile network capability. The NRF 109 is the control plane network element of the core network, and is responsible for dynamic registration of a service capability of a network function and network function discovery. The PCF 110 mainly supports providing a unified policy framework to control network behavior, and providing a policy rule to a control layer network function, and is responsible for obtaining policy-related subscription information of a subscriber. The UDM 111 is the control plane network element of the core network and a home subscriber server, and may be used for unified data management and supporting functions such as 3GPP authentication, user identity operation, permission grant, registration, and mobility management. The NSSF 112 is configured to implement a network slice selection function for the terminal. The NSSF 112 is a control plane entity of the core network, and is responsible for selecting a target NSI.

In the network architecture, Nausf is a service-based interface presented by the AUSF 105, Namf is a service-based interface presented by the AMF 106, Nsmf is a service-based interface presented by the SMF 107, Nnef is a service-based interface presented by the NEF 108, Nnrf is a service-based interface presented by the NRF 109, Npcf is a service-based interface presented by the PCF 110, Nudm is a service-based interface presented by the UDM 111, and Nnssf is a service-based interface presented by the NSSF 112. N1 is a reference point between the UE 101 and the AMF 106. N2 is a reference point between the (R)AN 102 and the AMF 106, and is configured to send a non-access stratum (non-access stratum, NAS) message and the like. N3 is a reference point between the (R)AN 102 and the UPF 103, and is configured to transmit user plane data and the like. N4 is a reference point between the SMF 107 and the UPF 103, and is configured to transmit information such as tunnel identifier information, data buffer indication information, and a downlink data notification message of an N3 connection. An N6 interface is a reference point between the UPF 103 and the DN 104, and is configured to transmit user plane data and the like.

Optionally, the communication system in this embodiment of this application may be specifically that shown in FIG. 2. That is, the DN in FIG. 1 may be an application server (APP server), and the NSSF may be a slice manager (slice manager) server. One or more tunnels (tunnels) may be set between the RAN and the UPF, and different slices may correspond to different tunnels.

It should be noted that this embodiment of this application may be applied to a system including at least one terminal and at least one application server, and there is a correspondence between the at least one terminal and the at least one application server. For example, there is a correspondence between a terminal and an application server that both correspond to a same slice.

It should be understood that one or more terminals may correspond to one application server.

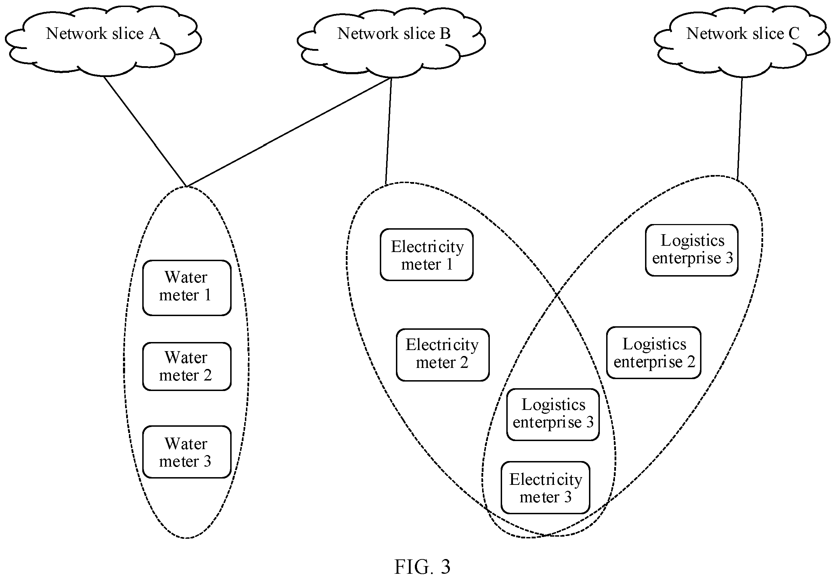

FIG. 3 is a schematic diagram of a network slice. Different network slices provide different services, for example, an electricity meter service, a water meter service, a logistics service, an Internet access service, a voice service, an ultra-low latency service, or an Internet of Things service. This is not limited in this application.

It should be further noted that one slice may provide a service for a same terminal, or may provide a service for a plurality of terminals. Different slices may provide services for a same terminal, or may provide services for different terminals. This is not limited in this application.

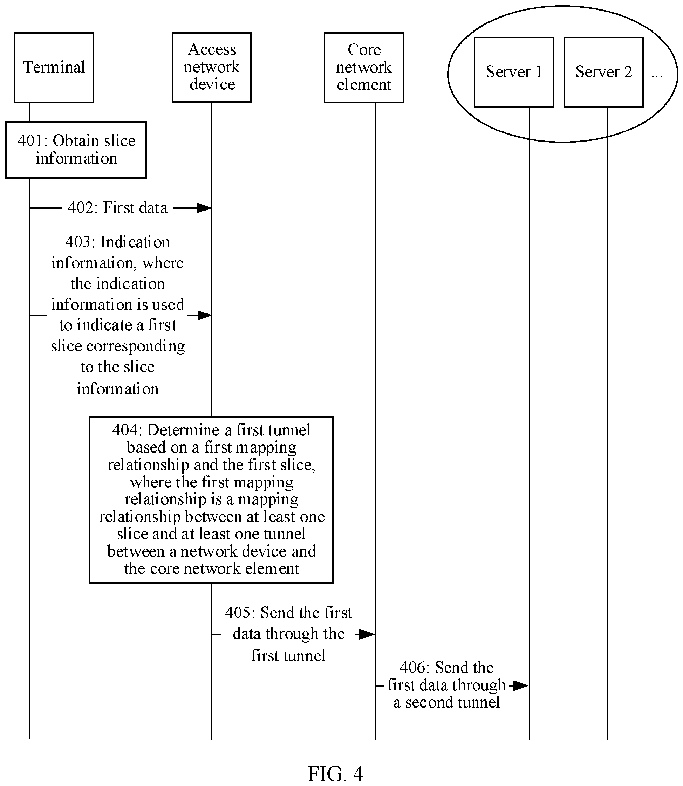

FIG. 4 is a schematic flowchart of a data transmission method according to an embodiment of this application.

It should be noted that an execution subject in this embodiment of this application may be a terminal, an access network device, a core network element, an application server, or a network slice management server, or may be a chip in the terminal, a chip in the access network device, a chip in the core network element, a chip in the application server, or a chip in the network slice management server. For ease of description, an example in which an execution subject is a terminal, an access network device, a core network element, an application server, or a network slice management server is used for description in this embodiment. However, this application is not limited thereto.

401: The terminal obtains slice information, where the slice information is slice information of a slice corresponding to first data.

Specifically, the terminal may receive the slice information from the access network device in real time. Alternatively, the slice information is prestored in the terminal. For example, the slice information is prestored in a storage module of the terminal, and the terminal reads the slice information from the storage module, and learns of the slice corresponding to the first data.

It should be understood that the slice information may be a slice identifier (slice ID), an attribute or a feature of a slice, or the like. That is, at least one corresponding slice can be determined based on the slice information.

Optionally, the application server corresponding to the terminal may send slice request information to the slice management server, and receive slice information responded by the slice management server. The application server sends the slice information to the terminal.

For example, if the terminal is a water meter, a water meter server requests slice information from a slice management server, receives slice information sent by the slice management server (where for example, the slice information is a slice identifier, and the slice identifier may be a slice ID whose value is "01"), and then sends the slice information to the water meter. If the terminal is an electricity meter, an electricity meter server requests slice information from a slice management server, receives slice information sent by the slice management server (where for example, the slice information is a slice identifier, and the slice identifier may be a slice ID whose value is "10"), and then sends the slice information to the electricity meter.

It should be understood that, that the application server sends the slice information to the terminal may be that the slice information of the application server reaches the terminal through a core network (core network, CN) control node and the access network device successively. The CN control node may be an SMF or an AMF

402: The terminal sends the first data to the access network device. Correspondingly, the access network device receives the first data from the terminal.

Specifically, before step 402, the terminal may receive resource information from the access network device, where the resource information is used to indicate an uplink resource of the terminal, and the terminal may send the first data on the uplink resource.

Optionally, if a size of an uplink resource required for the first data does not match a size of the uplink resource indicated by the resource information, for example, the size of the uplink resource required for the first data is greater than the size of the uplink resource indicated by the resource information, segment transmission may be performed on the first data.

Specifically, the size of the uplink resource may be a quantity of physical resource blocks (physical resource blocks, PRBs). The terminal adds information about a sequence number (sequence number, SN) and a sequence offset (sequence offset, SO) to a data packet at a radio link control (radio link control, RLC) layer, where the SN indicates a sequence number of the data packet, and the SO indicates (during segmentation) a specific byte (including the nth byte) from which the following part in the data packet starts to be transmitted. If the terminal is the water meter, for a water meter service, transmission is performed only once every month or several months, and one or more data packets may be transmitted at a time. Therefore, after random access each time, the water meter terminal considers that an RLC SN starts from zero. After data transmission is completed, the water meter terminal returns to an idle (IDLE) state or an inactive (INACTIVE) state and does not record a current RLC SN.

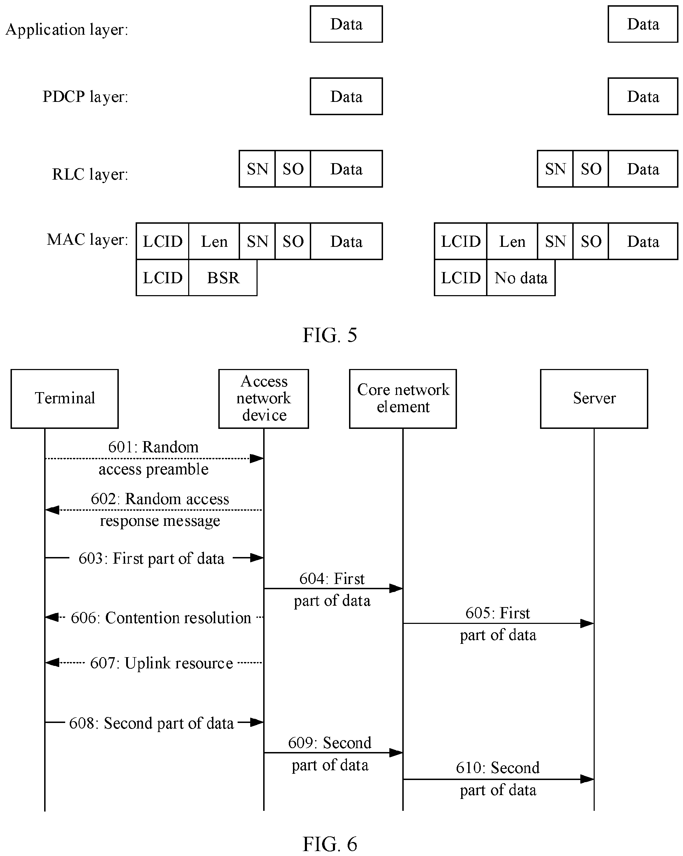

For example, the terminal identifies segmented data. The data is transmitted from an application (application) layer to a packet data convergence protocol (packet data convergence protocol, PDCP) layer and then to the RLC layer, SN and SO fields are added to the data packet at the RLC layer, and a logical channel identifier (logical channel ID, LCID) field and a length (length, Len) field are added to the data packet at a media access control (media access control, MAC) layer, as shown in FIG. 5. The LCID field may include two bits, that is, four values may be used, and respectively indicate a terminal data field, a data link layer padding (padding) field, a buffer status report (buffer status reports, BSR) field, and a reserved field. For example, the reserved field may be used to indicate that no data is transmitted.

Correspondingly, a receiving process of the access network device is as follows: In a random access procedure, the access network device allocates a temporary (temp)-radio network temporary identifier (radio network temporary identifier, RNTI) identifier to the terminal. The terminal transmits the first data by using a message (msg) 3 of random access, and starts a timer. During running of the timer, the terminal does not initiate random access to transmit subsequent data, but waits for the access network device to allocate the uplink resource to the terminal. If the timer expires, and the terminal does not learn of the uplink resource allocated by the access network device to the terminal, the terminal initiates random access again, and transmits second data by using a msg 3, where the second data carries a MAC control element (control element, CE) including the temp-RNTI. The server learns, based on the temp-RNTI, that the terminal sending the second data and the terminal sending the first data are a same terminal. In this way, the server combines the second data received this time and the first data received last time to recover a complete data packet. Alternatively, the access network device recovers a complete data packet and then sends the complete data packet to the core network element or the server. Alternatively, the access network device sends each segmented data to the server in a receiving sequence. In this case, the access network device does not need to add segment identification information to the data.

Optionally, if the resource information is encrypted resource information, the terminal may obtain, based on a key, the uplink resource indicated by the resource information, and send the first data on the uplink resource. In this way, in this application, an attack of a malicious terminal can be avoided, and network security performance is improved.

Specifically, the uplink resource required by the terminal to send the data to the access network device may be obtained from the resource information. If the uplink resource indicated by the resource information is encrypted, the terminal needs to parse the uplink resource from the resource information based on a key learned of by the terminal, and sends the first data to the access network device by using the first resource. In other words, the terminal cannot obtain the uplink resource if the resource information is not allocated to the terminal. In this way, the attack of the malicious terminal can be avoided, and communication security performance is improved.

It should be noted that the key of the terminal may be separately sent by the application server to the terminal. Alternatively, the application server may simultaneously send the key of the terminal and the slice information to the terminal. For example, the slice information and the key are notified to the terminal through the application layer.

It should be further noted that the application server and the terminal may agree on a plurality of keys in advance, so that one key is used for encryption each time. If the terminal is the water meter, a same key or different keys may be used for water meter data sent each month for a plurality of times.

It should be understood that different slice information of different data may be carried in one SIB, and is broadcast and sent by a base station. For example, the base station may broadcast slice information of electricity meter data and slice information of water meter data that are carried in one SIB.

It should be noted that the access network device may include a CU and a DU. The CU is responsible for resource allocation, and the DU is responsible for transmission of air interface data. For example, that the access network device sends the resource information to the terminal may be that the CU sends the resource information to the terminal.

Optionally, the resource information may include a physical random access channel (physical random access channel, PRACH) parameter or a PUSCH parameter, or may include a scheduling-free resource parameter. In other words, that the resource information is encrypted may mean that the PRACH parameter is encrypted or the scheduling-free resource parameter is encrypted.

Specifically, an access parameter allocated by the access network device may be a PRACH resource used for four-step random access. That is, the resource information may be a PRACH configuration (configuration), and correspondingly, the uplink resource may be a physical random access channel (physical random access channel, PRACH) resource. The resource information may specifically include a time-frequency resource of the PRACH resource, a subcarrier spacing and a cyclic prefix (cyclic prefix, CP) that are used for a PRACH, a format of the PRACH, a power of a preamble that the access network device expects to receive, and a time-frequency resource position of a message (msg A).

The resource information may include the PUSCH parameter, and correspondingly, the uplink resource is a PUSCH resource. For example, an access parameter allocated by the access network device is a parameter used for two-step random access. In this case, the resource information includes a PUSCH resource parameter corresponding to each preamble (preamble), and may be specifically at least one of a time-frequency position of the PUSCH resource, a modulation and demodulation parameter used by the terminal to transmit data on these PUSCH resources, or a power of a signal that the access network device expects to receive on these PUSCHs.

The resource information includes the scheduling-free resource parameter, and correspondingly, the uplink resource may be a scheduling-free resource. For example, when the terminal stores a valid timing advance (TA), or a long CP value is used for an uplink transmission resource pre-reserved by the access network device for the terminal, the terminal may directly use the scheduling-free resource to transmit data without random access.

It should be noted that when the slice information corresponding to the first data is received from the access network device, and the resource information includes the PRACH parameter, the slice information and the resource information may be carried in one system information block (system information block, SIB) for transmission. If the resource information includes the scheduling-free resource parameter, the resource information may not be transmitted by using a SIB, but is transmitted by using downlink control information (downlink control information, DCI) scrambled by using an application server-specific radio network temporary identifier (radio network temporary identifier, RNTI). In this way, only the terminal corresponding to the application server can obtain, through parsing, the scheduling-free resource parameter in the DCI.

In an embodiment, the resource information may be encrypted by the access network device.

Specifically, the access network device may obtain the key in advance, encrypt the resource information, and then send the resource information to the terminal to configure the uplink resource for the terminal. The key may be determined by the server, and sent to the access network device.

In another embodiment, the resource information may alternatively be encrypted by a first network element.

Specifically, the access network device may further send the resource information to the first network element, and the first network element encrypts the resource information, and returns the encrypted resource information to the access network device. The access network device then sends the encrypted resource information to the terminal. The first network element may be an AMF, or may be a server.

For example, the access network device generates first resource information, and sends the first resource information to the AMF. The AMF obtains a key from the server, and encrypts the first resource information by using the key, to obtain second resource information. The access network device receives the second resource information sent by the AMF, and sends the second resource information to the terminal.

403: The terminal sends indication information to the access network device, where the indication information is used to indicate that the first data corresponds to the first slice. Correspondingly, the access network device receives the indication information from the terminal, and determines, based on the indication information, the first slice corresponding to the first data.

In an embodiment, the indication information may directly indicate the first slice corresponding to the first data. For example, the indication information includes the first slice corresponding to the first data.

In another embodiment, the indication information may alternatively indirectly indicate the first slice corresponding to the first data.

For example, the indication information includes a data type of the first data.

Specifically, there is a correspondence between a data type and a slice. In this way, the access network device may determine, based on the data type of the first data, the first slice corresponding to the first data. For example, the data type of the first data may be a service type or a service identifier (identity, ID) of the first data.

For example, the indication information includes identification information of the terminal.

Specifically, there is a correspondence between identification information of a terminal and a slice. In this way, the access network device determines, based on the identification information of the terminal that sends the first data, the first slice corresponding to the first data. For example, the identification information of the terminal is an ID of the terminal.

Optionally, the indication information and the first data may be separate control packets or data packets. Alternatively, the indication information and the first data may be carried in a same data packet.

Specifically, the indication information may be a control packet generated at the media access control (media access control, MAC) layer, the radio link control (radio link control, RLC) layer, the packet data convergence protocol (packet data convergence protocol, PDCP) layer, or a service data adaptation protocol (service data adaptation protocol, SDAP) layer. Alternatively, the indication information may be carried in a MAC header, an RLC header, a PDCP header, or an SDAP header of a data packet, and the first data is data content of the data packet.

It should be noted that step 403 may be performed before step 402. To be specific, that step 403 is performed before step 402 may be specifically that the indication information is carried in control signaling. For example, the control signaling is a radio resource control (radio resource control, RRC) message. Alternatively, step 403 may be performed after step 402. To be specific, after the terminal sends the first data, the access network device may further send request information to the terminal to request the slice corresponding to the first data. In this way, the terminal may send the indication information after sending the first data. Alternatively, step 402 and step 403 may be performed simultaneously. To be specific, the indication information and the first data may be carried in one data packet.

404: The access network device determines a first tunnel based on a first mapping relationship and the first slice, where the first mapping relationship is a mapping relationship between at least one slice and at least one tunnel, and the at least one tunnel is a tunnel between the access network device and the core network element.

Specifically, one or more tunnels (tunnels) may be set between the access network device and the core network element, and there may be a mapping relationship between a slice and a tunnel. In this way, the access network device may determine, based on the mapping relationship, the first tunnel corresponding to the first slice. In other words, different slices may correspond to different tunnels, that is, data corresponding to different slices may be transmitted through different tunnels, to avoid congestion caused because data is simultaneously transmitted through a same tunnel for communication, and improve communication efficiency.

It should be understood that the core network element may be a UPF.

It should be noted that the mapping relationship between the at least one slice and the at least one tunnel may be that one or more slices corresponding to one tunnel or one slice corresponding to one or more tunnels. This is not limited in this application.

It should be further noted that the first mapping relationship may be represented in a form of a list, that is, the list includes two list items: a tunnel and a slice, and the access network device may learn of, through table lookup, a tunnel corresponding to each slice.

Optionally, in step 401, when the terminal receives the slice information from the slice management server through the CN control node, the CN control node may send a tunnel establishment request after receiving the slice information of the terminal, to request to establish a tunnel (tunnel) between the access network device and the UPF and establish a tunnel between the UPF and the application server.

Specifically, the CN control node sends a tunnel establishment request to the UPF. The UPF allocates a tunnel identifier (TEID) 1 to the tunnel, and sends the TEID 1 to the CN control node. The CN control node notifies an application server of the TEID 1. The application server allocates a tunnel identifier TEID 2 to the tunnel, and sends the TEID 2 to the UPF through the CN control node. In this way, both the UPF and the application server learn of a TEID allocated by the peer, and then may perform uplink and downlink data transmission. In other words, the UPF may be connected to different application servers through different tunnels.

The tunnel establishment request may also be used to request to establish a tunnel between the UPF and the access network device. The UPF allocates a tunnel identifier TEID 3 to the tunnel, and sends the TEID 3 to the CN control node. The CN control node then notifies the access network device of the TEID 3. The access network device allocates a tunnel identifier TEID 4 to the tunnel, and sends the TEID 4 to the UPF through the CN control node. In this way, both the UPF and the access network device learn of a TEID allocated by the peer, and then may perform uplink and downlink data transmission.

It should be noted that, if only uplink data transmission is performed through the tunnel, only the TEID 2 and/or the TEID 4 need/needs to be learned of. If only downlink data transmission needs to be performed through the tunnel, only the TEID 1 and/or the TEID 3 need/needs to be learned of.

Optionally, the access network device receives configuration information, where the configuration information is used to indicate the first mapping relationship.

Specifically, the first mapping relationship may be determined by the core network element, or may be determined by the application server, or may be determined by the slice management server, and sent to the access network device. This is not limited in this application.

405: The access network device sends the first data to the core network element through the first tunnel. Correspondingly, the core network element receives the first data through the first tunnel.

In an embodiment, the access network device may further receive a first identification code from the terminal, and obtain an identification code list. In this way, the access network device determines, based on whether the identification code list includes the first identification code, whether to send the resource information to the terminal. Correspondingly, the terminal sends the first identification code.

Specifically, the first identification code may be used to identify the terminal or identify a slice. For example, there is a correspondence between an identification code and a terminal, or there is a correspondence between an identification code and a slice. The access network device may determine whether the first identification code is in the identification code list. If the first identification code is in the identification code list, the access network device sends the resource information to the terminal. If the first identification code is not in the identification code list, the access network device does not send the resource information to the terminal. Therefore, in this application, the attack of the malicious terminal can be avoided, and network security performance is improved.

It should be noted that the identification code is allocated by the application server to the terminal, and may be specifically implemented by using an application layer message, or may be written in a hardware memory of the terminal. The application server may allocate an identification code to a terminal in an area.

It should be understood that the first identification code may be a separate control packet, for example, may be a control packet generated at the MAC layer, the RLC layer, the PDCP layer, or the SDAP layer. Alternatively, the first identification code is a separate MAC control unit, a separate PDCP control unit, a separate SDAP control unit, a separate RLC control unit, or a separate control unit of any layer.

In another embodiment, the access network device may further receive the identification information from the terminal, where the identification information and the first data are carried in a same data packet. The access network device may determine, based on the identification information, whether the terminal is legal. If the terminal is legal, the first data is sent to the core network element. If the terminal is illegal, the first data is not sent to the core network element.

Specifically, the identification information of the terminal may be an ID of the terminal, or may be an Internet Protocol (Internet Protocol, IP) address of the terminal, or may be other information that can uniquely identify the terminal, or may be the foregoing identification code. When the data packet is transmitted to the access network device in an uplink direction, the access network device may determine, based on the identification information of the terminal in the data packet, whether data content (that is, the first data) in the data packet is legal. If the data content is legal, the access network device sends the data packet to the core network element. If the data content is illegal, the access network device does not send the data packet to the core network element. Therefore, in this embodiment of this application, a malicious attack behavior may be limited to the access network device, and does not spread to the core network element, thereby improving network security performance.

It should be noted that the access network device may prestore identification information of a plurality of legal terminals, for example, store an identification information list, where the identification information list includes the identification information of the plurality of legal terminals. In this way, the access network device may determine, based on identification information of a current terminal, whether the terminal is legal.

It should be understood that when the identification information is an identification code, a corresponding identification information list may be an identification code list.

It should be further understood that the identification information of the terminal may be in any one of a MAC subheader, an RLC header, a PDCP header, or an SDAP header of the data packet.

Optionally, when determining whether the identification information is legal, if the identification information in the data packet does not exist in the identification information list, the access network device may send the identification information in the data packet to the application server, and the application server determines whether the identification information is legal. If the identification information is legal, the application server may send identification information list update information to the access network device, to add the identification information in the data packet to the identification information list.

Optionally, step 405 may be specifically as follows: The access network device may further receive, within a preset time interval, second data corresponding to the first slice, and simultaneously send the first data and the second data through the first tunnel when the preset time interval expires.

Specifically, the access network device may preset the preset time interval, and within the preset time interval, the access network device may uniformly collect one or more pieces of received data corresponding to a same slice, and locally store the received data, and simultaneously send the one or more pieces of data to the core network element when the preset time interval expires. In this way, relative to a case in which the access network device immediately sends data to the core network element after receiving the data from the terminal, power consumption overheads of the access network device are reduced, and implementation of the application server is simplified.

It should be noted that the preset time interval may be a transmission periodicity, that is, when the preset time interval expires, timing of a next periodicity is started. Alternatively, the access network device may flexibly set the preset time interval based on a delay requirement of a service. A start moment of the preset time interval may be a moment of transmitting a piece of data. After one time interval expires, timing of a next time interval may be started immediately, or timing may be performed when next piece of data is sent. This is not limited in this application.

Duration of the data transmission periodicity is not limited in this application.

It should be understood that the access network device may also send the preset time interval to the terminal or the application server, so that the terminal and the application server can send or receive data more properly.

406: The core network element sends the first data to the application server through a second tunnel. Correspondingly, the application server receives the first data.

It should be noted that a tunnel between the core network element and a first application server may be the second tunnel, and a tunnel between the core network element and a second application server may be a tunnel different from the second tunnel. In other words, the core network element can reach different application servers through different tunnels.

Before a data radio bearer (data radio bearer, DRB) is established, that the terminal sends the data in step 402 may be specifically that the terminal sends the data packet in segments. A specific sending procedure is that shown in FIG. 6. It should be noted that the following steps show a manner in which the terminal sends the data packet in segments. However, this application is not limited thereto.

601: A terminal sends a random access preamble to an access network device.

602: The terminal receives a random access response message from the access network device.

Specifically, the random access response message may include indication information of an uplink resource allocated to the terminal, a temporarily allocated cell (cell, C)-RNTI (T-RNTI), and the like. In other words, the resource information in the foregoing embodiment may be carried in the random access response message.

603: The terminal sends a first part of data to the access network device.

Specifically, one data packet may be segmented into a plurality of parts for sending. An example in which one data packet is segmented into two parts of data is used for description below.

It should be noted that the terminal may send the first part of data by using a preset resource, that is, steps 601 and 602 may not be performed.

604: The access network device sends the first part of data to a core network element.

605: The core network element sends the first part of data to a server.

606: The terminal receives contention resolution information from the access network device.

Specifically, the access network device sends the contention resolution information (MSG 4) to the terminal. The contention resolution information includes a contention resolution timer (mac-contention resolution timer). During running of the timer, the terminal does not initiate random access to transmit subsequent data, but waits for the access network device to allocate an uplink resource to the terminal.

607: The access network device sends the uplink resource to the terminal.

608: The terminal sends a second part of data to the access network device.

After detecting the uplink resource, the terminal sends the second part of data to the access network device by using the uplink resource. The second part of data may carry the T-RNTI obtained in step 602.

It should be noted that the terminal may send the second part of data by using the preset resource, that is, step 606 and step 607 may not be performed.

609: The access network device sends the second part of data to the core network element.

610: The core network element sends the second part of data to the server.

Specifically, the server learns, based on the temp-RNTI, that the terminal sending the second data and the terminal sending the first data are a same terminal. In this way, the server combines the segment received this time and the segment received last time to recover the complete data packet.

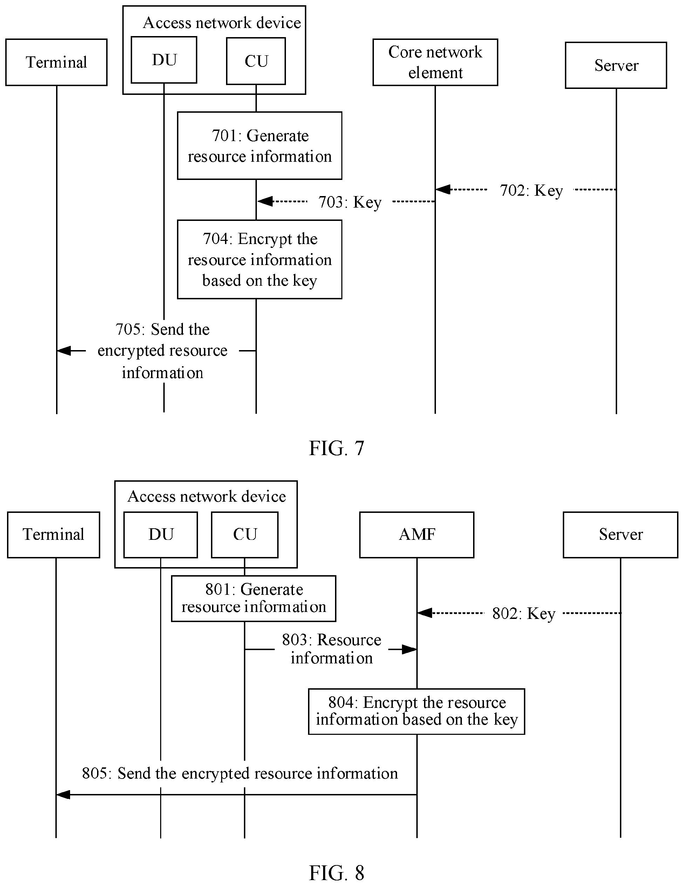

As shown in FIG. 7, encrypted resource information sent by an access network device to a terminal may be specifically encrypted in the following manner. It should be noted that the following steps show a manner of performing encryption by an access network device. However, this application is not limited thereto.

701: The access network device generates resource information.

702: The server sends a key to a core network element.

703: The core network element sends the key to the network device.

It should be noted that step 702 and step 703 may be performed before step 701, or may be performed after step 701. This is not limited in this application.

It should be further noted that the access network device may also prestore the key, that is, step 702 and step 703 may not be performed.

704: The access network device encrypts the resource information based on the key.

705: The access network device sends the encrypted resource information to the terminal.

As shown in FIG. 8, encrypted resource information sent by an access network device to a terminal may be specifically encrypted in the following manner.

It should be noted that the following steps show a manner of performing encryption by a first network element. However, this application is not limited thereto.

801: The access network device generates resource information.

802: An AMF receives a key from a server.

It should be noted that the AMF may prestore the key. In this way, step 802 may not be performed.

803: The access network device sends the resource information to the AMF

It should be noted that the key in step 802 may be sent to the AMF before step 803, or may be sent to the AMF after step 803. This is not limited in this application.

804: The AMF encrypts the resource information based on the key.

805: The AMF sends the encrypted resource information to the terminal through the access network device.

For another example, the access network device generates first resource information, and transparently transmits the first resource information to the server through the AMF. The server encrypts the first resource information by using the key to obtain second resource information, and transparently transmits the second resource information to the access network device through the AMF. The access network device sends the second resource information to the terminal.

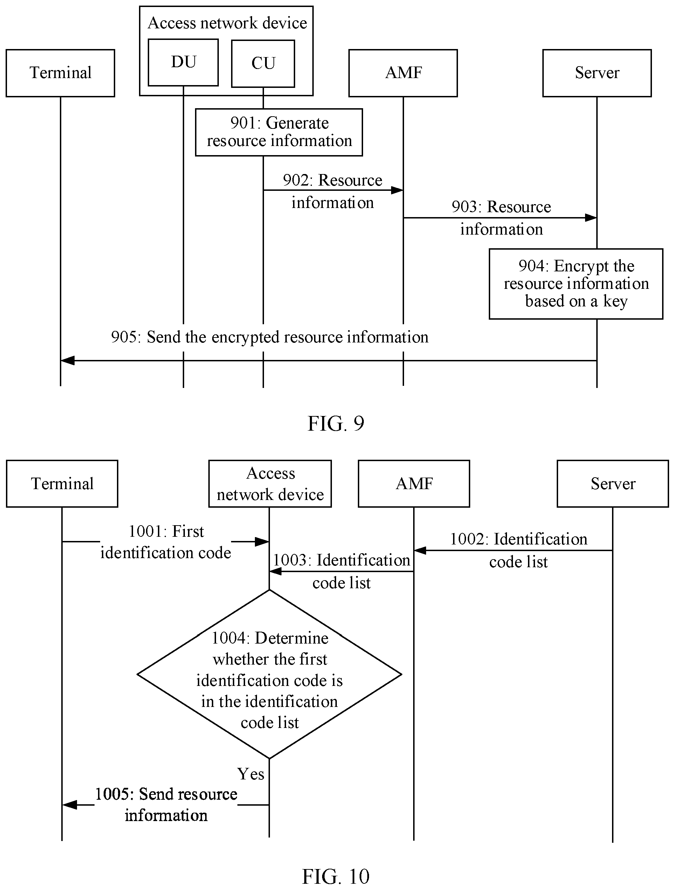

As shown in FIG. 9, encrypted resource information sent by an access network device to a terminal may be specifically encrypted in the following manner. It should be noted that the following steps show a manner of performing encryption by a server. However, this application is not limited thereto.

901: The access network device generates resource information.

902: The access network device sends the resource information to an AMF

903: The AMF sends the resource information to a server.

904: The server encrypts the resource information based on a key.

905: The server sends the encrypted resource information to the terminal through the AMF and the access network device.

It should be understood that if the access network device includes a CU and a DU, the CU may receive the resource information from a first network element, and forward the resource information to the terminal.

Steps in which the access network device determines, based on whether an identification code list includes a first identification code, whether to send the resource information to the terminal are specifically that shown in FIG. 10.

1001: The access network device receives the first identification code from the terminal.

Specifically, the first identification code may be used to identify the terminal or identify a slice. For example, there is a correspondence between an identification code and a terminal, or there is a correspondence between an identification code and a slice.

1002: An AMF receives the identification code list sent by a server. The identification code list may include one or more identification codes.

1003: The AMF forwards the identification code list to the access network device.

It should be understood that step 1002 and step 1003 may be performed before step 1001, or may be performed after step 1001. This is not limited in this application.

1004: The access network device determines whether the first identification code is in the identification code list.

1005: The access network device sends the resource information to the terminal when determining that the first identification code is in the identification code list.

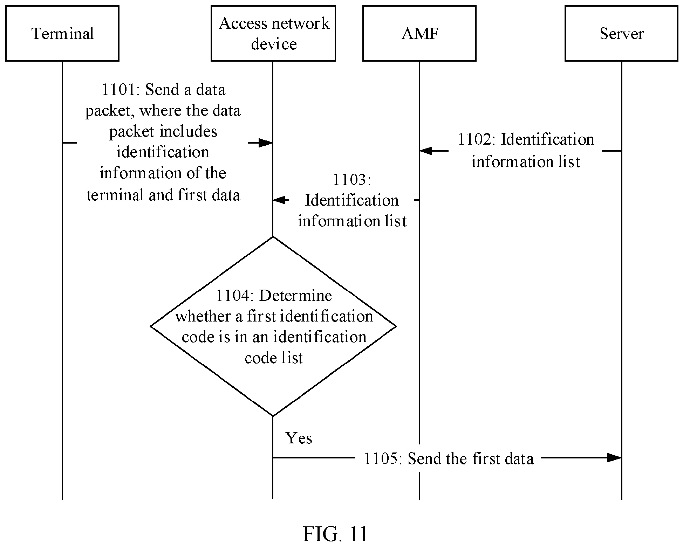

Steps in which the access network device determines, based on whether an identification information list includes first identification information, whether to send first data to a core network element may be that shown in FIG. 11.

1101: The access network device receives a data packet from a terminal, where the data packet includes identification information of the terminal and the first data.

1102: An AMF receives the identification information list sent by a server.

1103: The AMF forwards the identification information list to the access network device.

It should be understood that step 1102 and step 1103 may be performed before step 1101, or may be performed after step 1101. This is not limited in this application.

1104: The access network device determines whether the identification information of the terminal is in the identification information list.

1105. The access network device sends the first data to the terminal when determining that the first identification code is in the identification code list.

In an embodiment, after receiving the first data, the application server may send downlink data (for example, referred to as "fifth data") to the core network element, where the fifth data carries a first data packet identifier allocated by the core network element. The core network element receives the fifth data, determines the access network device and a third tunnel based on the fifth data, and sends fourth data to the access network device through the third tunnel, where the fourth data carries a second data packet identifier allocated by the access network device. The access network device receives the fourth data, determines the terminal based on the second data packet identifier of the fourth data, and sends third data to the terminal.

Specifically, the access network device receives an uplink data packet from the terminal, and transmits the uplink data packet to the core network element. The access network device allocates a data packet identifier (referred to as a "first data packet identifier" below) to the uplink data packet. When the uplink data packet is sent, the uplink data packet carries the first data packet identifier. For example, the first data packet identifier is SN1. The access network device stores "SN1 and an identifier of the terminal (for example, a UE ID)". When receiving the data packet, the core network element allocates a second data packet identifier SN2 to the data packet, and stores a combination of three fields "SN1+SN2+gNB ID". The core network element includes the second data packet identifier SN2 in the uplink data packet, and sends the uplink data packet to the server. When sending a downlink data packet to the terminal that sends the uplink data packet, the server includes the second data packet identifier SN2 allocated by the core network element that sends the uplink data packet in the downlink data packet. After receiving the downlink data packet (where the downlink data packet includes the fifth data), the core network element may determine, based on "SN1+SN2+gNB ID" stored by the core network element, an access network device that corresponds to the gNB ID and to which the downlink data packet is to be transmitted. In addition, the downlink data packet selects a tunnel used for uplink data packet transmission from a plurality of tunnels between the core network element and the access network device to send the downlink data packet to the access network device (where the downlink data packet includes the fourth data). The access network device receives the downlink data packet (where the downlink data packet includes the fourth data), and determines, based on the "SN1 and the UE ID" stored by the access network device, to transmit the downlink data packet (where the downlink data packet includes the third data) to the terminal corresponding to the UE ID.

It should be noted that duration of storing the "SN1 and the UE ID" by the access network device may be temporary or permanent. If the duration is temporary, the access network device may set the storage duration, or the storage duration may be set by a network slice management server, the core network element, the application server, or the like. This is not limited in this application.

Similarly, duration of storing the "SN1+SN2+gNB ID" by the core network element may also be temporary or permanent. If the duration is temporary, the core network element may set the storage duration, or the storage duration may be set by the network slice management server, the access network device, the application server, or the like. This is not limited in this application.

It should be further noted that if the access network device includes a CU and a DU, the CU and the DU separately record a first data packet identifier (that is, SN1) of uplink data. The CU may learn of, based on the SN1, a specific DU from which the uplink data comes, and the DU may learn of, based on the SN1, a specific terminal from which the uplink data comes.

It should be understood that a data packet identifier may be a number of a data packet.

Optionally, that the core network element determines the access network device based on a data packet identifier of the fourth data may be specifically that the core network element determines, based on the data packet identifier of the fourth data and a fifth mapping relationship, an access network device identifier corresponding to a first data packet identifier of the fourth data, where the fifth mapping relationship may be a mapping relationship between at least one first data packet identifier and at least one access network device identifier. In this way, the core network element may send the fourth data to the access network device corresponding to the access network device identifier.

It should be noted that the access network device may allocate different first data packet identifiers to different data, or may allocate a same first data packet identifier to different data.

It should be further noted that one or more data packet identifiers may correspond to one access network device identifier, and one data packet identifier may also correspond to one or more access network device identifiers.

In another embodiment, after receiving the first data, the application server may send downlink data to the core network element. The core network element receives the downlink data (for example, referred to as "fourth data"), determines the access network device and a third tunnel based on a source address and a destination address of the fourth data, and sends the fourth data to the access network device through the third tunnel. The access network device receives the fourth data, determines the terminal based on the source address and the destination address of the fourth data, and sends third data to the terminal.

Specifically, the core network element may determine the access network device based on the source address and the destination address of the fourth data. For example, the core network element detects that the source address of the fourth data is the same as a destination address of the first data and the destination address of the fourth data is the same as a source address of the first data. In this way, the core network element may send the fourth data to the access network device that sends the first data. In addition, the core network element may further determine the third tunnel from a plurality of tunnels between the core network element and the access network device based on the source address and the destination address of the fourth data, and send the fourth data to the access network device through the third tunnel.

It should be noted that an address in the source address or the destination address may be an Ethernet address, an IP address, a device address of the etherCAT, a memory address, or the like. This is not limited in this application.

Optionally, the access network device may determine a receiving terminal of the third data based on a source address and a destination address of the third data. Specifically, the source address of the third data is the same as the destination address of the first data, and the destination address of the third data is the same as the source address of the first data.

Optionally, that the access network device sends the third data to the terminal may be specifically: determining a terminal identifier based on a first data packet identifier of the third data and a third mapping relationship, where the third mapping relationship is a mapping relationship between at least one first data packet identifier and at least one terminal identifier; and sending the third data to the terminal corresponding to the terminal identifier.

It should be further noted that one or more first data packet identifiers may correspond to one terminal identifier, and one first data packet identifier may also correspond to one or more terminal identifiers.

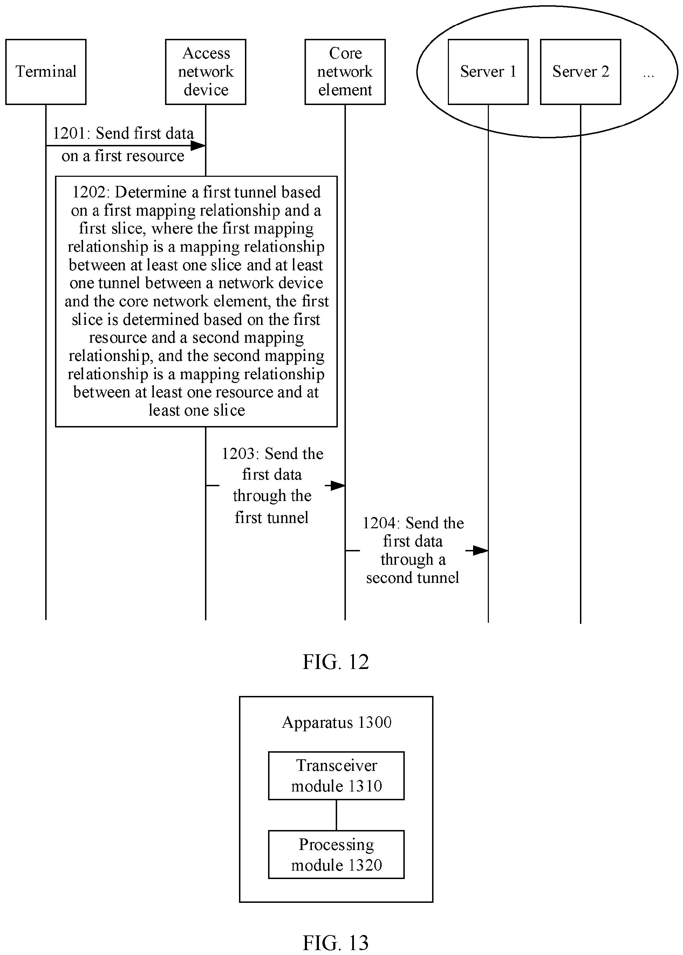

FIG. 12 is a schematic flowchart of a data transmission method according to an embodiment of this application.

It should be noted that, unless otherwise specified, same terms in this embodiment of this application and the embodiment shown in FIG. 4 have a same meaning.

1201: A terminal sends first data on a first resource. Correspondingly, an access network device receives the first data on the first resource.

Optionally, the terminal may obtain a key in advance, obtain, based on the key, an uplink resource indicated by encrypted resource information, and further determine the uplink resource indicated by the resource information as the first resource corresponding to a first slice. In other words, the terminal cannot obtain the uplink resource if the resource information is not allocated to the terminal. In this way, an attack of a malicious terminal can be avoided, and communication security performance is improved.

1202: The access network device determines a first tunnel based on a first mapping relationship and the first slice, where the first mapping relationship is a mapping relationship between at least one slice and at least one tunnel between the access network device and a core network element, the first slice is determined based on the first resource and a second mapping relationship, and the second mapping relationship is a mapping relationship between at least one resource and at least one slice.

Specifically, the access network device may implicitly determine a tunnel corresponding to a slice. For example, there is the second mapping relationship between a resource for transmitting data and a slice, and there is the first mapping relationship between a slice and a tunnel. Therefore, after receiving the first data on the first resource, the access network device may determine, based on the first resource and the second mapping relationship, the first slice corresponding to the first resource, determine, based on the first slice and the first mapping relationship, the first tunnel corresponding to the first slice, and then send the data to the core network element through the first tunnel. In other words, different slices may correspond to different tunnels, that is, data corresponding to different slices may be transmitted through different tunnels, to avoid congestion caused because data is simultaneously transmitted through a same tunnel for communication, and improve communication efficiency.

It should be noted that in the second mapping relationship, one or more resources may correspond to one slice, and one resource may correspond to one or more slices. This is not limited in this application. When one resource corresponds to a plurality of slices, when transmitting uplink data, the terminal may identify a specific slice of the uplink data.

It should be understood that the second mapping relationship may exist in a form of a list.

Optionally, the access network device may include a CU and a DU. Specifically, the DU may store the second mapping relationship, and the DU may determine, based on the second mapping relationship, a slice corresponding to a resource for transmitting data, and send the data and slice information to the CU. In this way, the CU can determine the first tunnel based on the slice corresponding to the data and the first mapping relationship, and then send the data to the core network element through the first tunnel.

In an embodiment, the access network device may also receive an identification code from the terminal. In this way, the access network device may determine whether the first identification code is in an identification code list. If the first identification code is in the identification code list, the access network device sends the resource information to the terminal. If the first identification code is not in the identification code list, the access network device does not send the resource information to the terminal. Therefore, in this application, the attack of the malicious terminal can be avoided, and network security performance is improved.

In another embodiment, when a data packet is transmitted to the access network device in an uplink direction, the access network device may determine, based on identification information of the terminal in the data packet, whether data content (that is, the first data) in the data packet is legal. If the data content is legal, the access network device sends the data packet to the core network element. If the data content is illegal, the access network device does not send the data packet to the core network element. Therefore, in this embodiment of this application, a malicious attack behavior may be limited to the access network device, and does not spread to the core network element, thereby improving network security performance.

1203: The access network device sends the first data to the core network element through the first tunnel. Correspondingly, the core network element receives the first data through the first tunnel.

1204: The core network element sends the first data to an application server through a second tunnel.

Specifically, a tunnel between the core network element and a first application server may be the second tunnel, and a tunnel between the core network element and a second application server may be a tunnel different from the second tunnel. In other words, the core network element can reach different application servers through different tunnels.

The embodiments described in this specification may be independent solutions, or may be combined based on internal logic. All these solutions fall within the protection scope of this application.

It may be understood that in the foregoing method embodiments, the methods and the operations that are implemented by the terminal may alternatively be implemented by a component (for example, a chip or a circuit) that may be used in the terminal, and the methods and the operations that are implemented by the access network device may alternatively be implemented by a component (for example, a chip or a circuit) that may be used in the access network device.

The foregoing mainly describes the solutions provided in the embodiments of this application from a perspective of interaction. It may be understood that, to implement the foregoing functions, each network element, such as a transmit end device or a receive end device, includes a corresponding hardware structure and/or software module for performing each function. A person skilled in the art may be aware that, with reference to the examples described in the embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, the transmit end device or the receive end device may be divided into functional modules based on the foregoing method examples. For example, each functional module may be obtained through division based on a corresponding function, or two or more functions may be integrated into one processing module. The integrated module may be implemented in a form of hardware, or may be implemented in a form of a software functional module. It should be noted that in the embodiments of this application, division into modules is an example, and is merely logical function division. During actual implementation, there may be another division manner. An example in which each functional module is obtained through division based on a corresponding function is used below for description.

It should be understood that the specific examples in the embodiments of this application are merely intended to help a person skilled in the art better understand the embodiments of this application, rather than limit the scope of the embodiments of this application.

It should be understood that sequence numbers of the foregoing processes do not mean execution orders in various embodiments of this application. The execution orders of the processes should be determined based on functions and internal logic of the processes, and should not be construed as any limitation on the implementation processes of the embodiments of this application.

The foregoing describes in detail the methods provided in the embodiments of this application with reference to FIG. 4 to FIG. 12. The following describes in detail apparatuses provided in the embodiments of this application with reference to FIG. 6 to FIG. 16. It should be understood that descriptions of the apparatus embodiments correspond to the descriptions of the method embodiments. Therefore, for content that is not described in detail, refer to the foregoing method embodiments. For brevity, details are not described herein again.

FIG. 13 is a schematic block diagram of a data transmission apparatus 1300 according to an embodiment of this application.

It should be understood that the apparatus 1300 may correspond to the terminal in the embodiments shown in FIG. 4 to FIG. 12, and may have any function of the terminal in the methods. The apparatus 1300 may be a terminal, or may be a chip in the terminal. The apparatus 1300 includes a transceiver module 1310. Optionally, the apparatus 1300 includes a processing module 1320. The transceiver module may include a sending module and/or a receiving module.

The processing module 1320 is configured to obtain slice information, or receive slice information through the transceiver module 1310, where the slice information is slice information of a slice corresponding to data.

The transceiver module 1310 is configured to send the data to an access network device.

The transceiver module 1310 is further configured to send indication information to the access network device, where the indication information is used to indicate the slice corresponding to the data.

Optionally, the indication information includes the slice information of the slice corresponding to the data.

Optionally, the indication information includes a data type of the data.

Optionally, the indication information includes identification information of the terminal.

Optionally, the transceiver module 1310 is further configured to receive resource information from the access network device, where the resource information is used to indicate an uplink resource of the terminal, and the resource information is encrypted resource information. The processing module 1320 is further configured to obtain, based on a first key, the uplink resource indicated by the resource information. The transceiver module 1310 is specifically configured to send the data to the access network device on the uplink resource.

Optionally, the transceiver module 1310 is further configured to send an identification code of the terminal to the access network device, where the identification code corresponds to the uplink resource of the terminal.

Optionally, the transceiver module 1310 is specifically configured to send a data packet to the access network device, where the data packet includes the data and the identification information of the terminal.

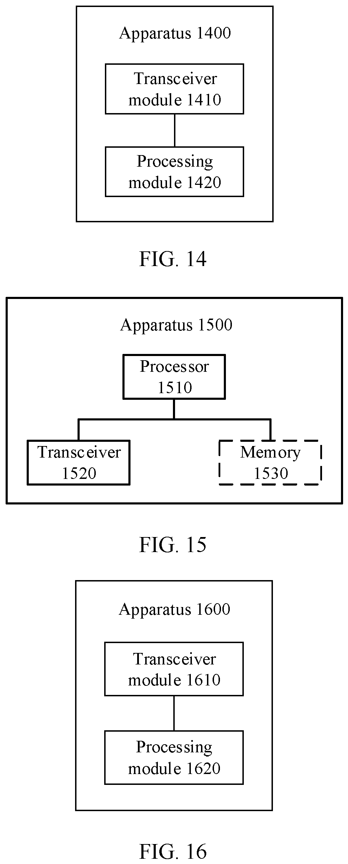

FIG. 14 is a schematic block diagram of a data transmission apparatus 1400 according to an embodiment of this application.

It should be understood that the apparatus 1400 may correspond to the terminal in the embodiment shown in FIG. 12, and may have any function of the terminal in the method. The apparatus 1400 may be a terminal, or may be a chip in the terminal. The apparatus 1400 includes a transceiver module 1410. Optionally, the apparatus 1400 includes a processing module 1420. The transceiver module may include a sending module and/or a receiving module.

The processing module 1420 is configured to obtain slice information, or receive slice information through the transceiver module 1410, where the slice information is slice information of a slice corresponding to data.

The transceiver module 1410 is configured to send the data to an access network device on a resource corresponding to the slice.

Optionally, the transceiver module 1410 is further configured to receive resource information, where the resource information is used to indicate an uplink resource of the terminal, and the resource information is encrypted resource information. The processing module 1420 is further configured to obtain, based on a key, the uplink resource indicated by the resource information. The processing module 1420 is further configured to determine the uplink resource indicated by the resource information as the resource corresponding to the slice.

Optionally, the transceiver module 1410 is further configured to send an identification code of the terminal, where the identification code corresponds to the uplink resource of the terminal.

Optionally, the transceiver module 1410 is specifically configured to send a data packet to the access network device, where the data packet includes the data and identification information of the terminal.

FIG. 15 shows a data transmission apparatus 1500 according to an embodiment of this application. The apparatus 1500 may be the terminal in any one of the embodiments in FIG. 4 to FIG. 12. The apparatus may use a hardware architecture shown in FIG. 15. The apparatus may include a processor 1510 and a transceiver 1530. The transceiver may include a transmitter and/or a receiver. Optionally, the apparatus may further include a memory 1540. The processor 1510, the transceiver 1530, and the memory 1540 communicate with each other by using an internal connection path. Related functions implemented by the processing module 1420 in FIG. 14 or the processing module 1320 in FIG. 13 may be implemented by the processor 1510. Related functions implemented by the transceiver module 1410 in FIG. 14 and the transceiver module 1310 in FIG. 13 may be implemented by the processor 1510 by controlling the transceiver 1530.

Optionally, the processor 1510 may be a CPU, a microprocessor, an ASIC, a dedicated processor, or one or more integrated circuits configured to perform the technical solutions in the embodiments of this application. Alternatively, the processor may be one or more devices, circuits, and/or processing cores for processing data (for example, computer program instructions). For example, the processor may be a baseband processor or a central processing unit. The baseband processor may be configured to process a communication protocol and communication data, and the central processing unit may be configured to: control a data transmission apparatus (for example, a base station, a terminal, or a chip), execute a software program, and process data of the software program.

Optionally, the processor 1510 may include one or more processors, for example, include one or more CPUs. When the processor is one CPU, the CPU may be a single-core CPU or a multi-core CPU.

The transceiver 1530 is configured to: send and receive data and/or a signal, and receive data and/or a signal. The transceiver may include a transmitter and a receiver. The transmitter is configured to send data and/or a signal, and the receiver is configured to receive data and/or a signal.

The memory 1540 includes but is not limited to a random access memory (random access memory, RAM), a read-only memory (read-only memory, ROM), an erasable programmable memory (erasable programmable read-only memory, EPROM), a compact disc read-only memory (compact disc read-only memory, CD-ROM), and the like. The memory 1540 is configured to store related instructions and data.

The memory 1540 is configured to store program code and data of the terminal, and may be a separate device or integrated into the processor 1510.

Specifically, the processor 1510 is configured to control the transceiver to perform information transmission with an access network device. For details, refer to the descriptions in the foregoing method embodiments. Details are not described herein again.

During specific implementation, in an embodiment, the apparatus 1500 may further include an output device and an input device. The output device communicates with the processor 1510, and may display information in a plurality of manners. For example, the output device may be a liquid crystal display (liquid crystal display, LCD), a light emitting diode (light emitting diode, LED) display device, a cathode ray tube (cathode ray tube, CRT) display device, a projector (projector), or the like. The input device communicates with the processor 1510, and may receive an input from a user in a plurality of manners. For example, the input device may be a mouse, a keyboard, a touchscreen device, or a sensing device.

It may be understood that FIG. 15 shows merely a simplified design of the data transmission apparatus. During actual application, the apparatus may further include other necessary components, including but not limited to any quantity of transceivers, processors, controllers, memories, and the like, and all terminals that can implement this application shall fall within the protection scope of this application.

In a possible design, the apparatus 1500 may be a chip, for example, may be a communication chip that can be used in the terminal, and configured to implement a related function of the processor 1510 in the terminal. The chip may be a field programmable gate array, a dedicated integrated chip, a system chip, a central processing unit, a network processor, a digital signal processing circuit, or a microcontroller for implementing a related function, or may be a programmable controller or another integrated chip. Optionally, the chip may include one or more memories, configured to store program code. When the code is executed, the processor is enabled to implement a corresponding function.

An embodiment of this application further provides an apparatus. The apparatus may be a terminal or a circuit. The apparatus may be configured to perform an action performed by the terminal in the foregoing method embodiments.

FIG. 16 is a schematic block diagram of a data transmission apparatus 1600 according to an embodiment of this application.

It should be understood that the apparatus 1600 may correspond to the access network device in any one of the embodiments shown in FIG. 4 to FIG. 12, and may have any function of the access network device in the methods. The apparatus 1600 includes a transceiver module 1610 and a processing module 1620. The transceiver module may include a sending module and/or a receiving module.

The transceiver module 1610 is configured to receive first data from a terminal.

The processing module 1620 is configured to determine a first tunnel based on a first mapping relationship and a first slice, where the first mapping relationship is a mapping relationship between at least one slice and at least one tunnel, the at least one tunnel is a tunnel between the access network device and a core network element, and the first slice is a slice corresponding to the first data.

The transceiver module 1610 is further configured to send the first data to the core network element through the first tunnel.

Optionally, the transceiver module 1610 is specifically configured to receive the first data from the terminal on a first resource. That the first slice is a slice corresponding to the first data is specifically that the first slice is determined based on a second mapping relationship and the first resource, and the second mapping relationship is a mapping relationship between at least one resource and at least one slice.

Optionally, the transceiver module 1610 is further configured to receive indication information, where the indication information is used to indicate the first slice corresponding to the first data. That the first slice is a slice corresponding to the first data is specifically that the first slice is determined based on the indication information.

Optionally, the indication information includes slice information of the first slice corresponding to the first data.

Optionally, the indication information includes identification information of the terminal.

Optionally, the indication information includes a data type of the first data.

Optionally, the transceiver module 1610 is further configured to: send first resource information to a first network element, where the first resource information is used to indicate an uplink resource of the terminal; receive second resource information from the first network element, where the second resource information is obtained after the first network element encrypts the first resource information; and send the second resource information to the terminal.

Optionally, the first network element is an access and mobility management function AMF or an application server.

Optionally, the transceiver module 1610 is further configured to receive a key. The processing module 1620 is further configured to generate resource information based on the key, where the resource information is used to indicate an uplink resource of the terminal, and the third resource information is resource information encrypted by using the key. The transceiver module 1610 is further configured to send the resource information to the terminal.

Optionally, the transceiver module 1610 is further configured to receive a first identification code of the terminal from the terminal. The transceiver module 1610 is further configured to obtain an identification code list, where the identification code list includes at least one identification code. The transceiver module 1610 is further configured to: when the identification code list includes the first identifier, send resource information to the terminal, where the resource information is used to indicate an uplink resource of the terminal.

Optionally, the transceiver module 1610 is specifically configured to receive a data packet from the terminal, where the data includes the first data and the identification information of the terminal. The transceiver module 1610 is specifically configured to: when determining, based on the identifier of the terminal, that the terminal is legal, send the first data to the core network element through the first tunnel.

Optionally, the transceiver module 1610 is further configured to receive second data within a preset time interval, where the second data corresponds to the first slice. The transceiver module 1610 is specifically configured to simultaneously send the first data and the second data through the first tunnel when the preset time interval expires.

Optionally, the transceiver module 1610 is further configured to receive third data, where a first data packet identifier of the third data is the same as a first data packet identifier of the first data, and the first data packet identifier is a data packet identifier allocated by the access network device. The transceiver module 1610 is further configured to send the third data to the terminal, where the terminal is a terminal corresponding to a first terminal identifier, the first terminal identifier is determined based on the first data packet identifier of the third data and a third mapping relationship, and the third mapping relationship is a mapping relationship between at least one first data packet identifier and at least one terminal identifier.

Optionally, the transceiver module 1610 is further configured to receive third data. The transceiver module 1610 is further configured to send the third data to the terminal, where a source address of the third data is a destination address of the first data, and a destination address of the third data is a source address of the first data.

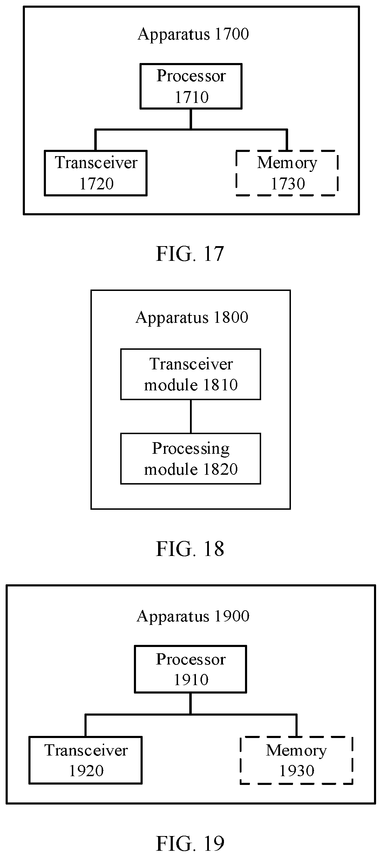

FIG. 17 shows a data transmission apparatus 1700 according to an embodiment of this application. The apparatus 1700 may be the access network device in FIG. 16. The apparatus may use a hardware architecture shown in FIG. 17. The apparatus may include a processor 1710 and a transceiver 1720. Optionally, the apparatus may further include a memory 1730. The processor 1710, the transceiver 1720, and the memory 1730 communicate with each other by using an internal connection path. Related functions implemented by the processing module 1620 in FIG. 16 may be implemented by the processor 1710. Related functions implemented by the transceiver module 1610 may be implemented by the processor 1710 by controlling the transceiver 1720.

Optionally, the processor 1710 may be a CPU, a microprocessor, an ASIC, a dedicated processor, or one or more integrated circuits configured to perform the technical solutions in the embodiments of this application. Alternatively, the processor may be one or more devices, circuits, and/or processing cores for processing data (for example, computer program instructions). For example, the processor may be a baseband processor or a central processing unit. The baseband processor may be configured to process a communication protocol and communication data, and the central processing unit may be configured to: control a data transmission apparatus (for example, a base station, a terminal, or a chip), execute a software program, and process data of the software program.

Optionally, the processor 1710 may include one or more processors, for example, include one or more CPUs. When the processor is one CPU, the CPU may be a single-core CPU or a multi-core CPU.

The transceiver 1720 is configured to: send data and/or a signal, and receive data and/or a signal. The transceiver may include a transmitter and a receiver. The transmitter is configured to send data and/or a signal, and the receiver is configured to receive data and/or a signal.

The memory 1730 includes but is not limited to a RAM, a ROM, an EPROM, and a CD-ROM. The memory 1730 is configured to store related instructions and data.

The memory 1730 is configured to store program code and data of the access network device, and may be a separate device or integrated into the processor 1710.

Specifically, the processor 1710 is configured to control the transceiver to perform information transmission with a terminal or a core network element. For details, refer to the descriptions in the foregoing method embodiments. Details are not described herein again.

During specific implementation, in an embodiment, the apparatus 1700 may further include an output device and an input device. The output device communicates with the processor 1710, and may display information in a plurality of manners. For example, the output device may be an LCD, an LED display device, a CRT display device, or a projector (projector). The input device communicates with the processor 1710, and may receive an input from a user in a plurality of manners. For example, the input device may be a mouse, a keyboard, a touchscreen device, or a sensing device.

It may be understood that FIG. 17 shows merely a simplified design of the data transmission apparatus. During actual application, the apparatus may further include other necessary components, including but not limited to any quantity of transceivers, processors, controllers, memories, and the like, and all access network devices that can implement this application shall fall within the protection scope of this application.

In a possible design, the apparatus 1700 may be a chip, for example, may be a communication chip that can be used in the access network device, and configured to implement a related function of the processor 1710 in the access network device. The chip may be a field programmable gate array, a dedicated integrated chip, a system chip, a central processing unit, a network processor, a digital signal processing circuit, or a microcontroller for implementing a related function, or may be a programmable controller or another integrated chip. Optionally, the chip may include one or more memories, configured to store program code. When the code is executed, the processor is enabled to implement a corresponding function.

An embodiment of this application further provides an apparatus. The apparatus may be an access network device or a circuit. The apparatus may be configured to perform an action performed by the access network device in the foregoing method embodiments.

FIG. 18 is a schematic block diagram of a data transmission apparatus 1800 according to an embodiment of this application.

It should be understood that the apparatus 1800 may correspond to the core network element in the embodiments shown in FIG. 4 to FIG. 12, and may have any function of the core network element in the methods. The apparatus 1800 includes a transceiver module 1810 and a processing module 1820. The transceiver module may include a sending module and/or a receiving module.

The transceiver module 1810 is configured to receive first data from an access network device through a first tunnel, where the first data corresponds to a first slice, the first tunnel is determined by the processing module 1820 based on the first slice and a first mapping relationship, and the first mapping relationship is a mapping relationship between at least one slice and at least one tunnel between the access network device and the core network element.

The transceiver module 1810 is further configured to send the first data to an application server through a second tunnel, where the second tunnel is determined by the processing module 1820 based on the first slice and a fourth mapping relationship, and the fourth mapping relationship is a mapping relationship between at least one slice and at least one tunnel between the core network element and at least one application server.

Optionally, the transceiver module 1810 is further configured to receive fourth data from the application server. The transceiver module 1810 is further configured to send the fourth data to the access network device through a third tunnel.

Optionally, when a source address of the fourth data is a destination address of the first data, and a destination address of the fourth data is a source address of the first data, the first tunnel is the third tunnel.

Optionally, when a first data packet identifier of the fourth data is the same as a first data packet identifier of the first data, the first tunnel is the third tunnel, and the first data packet identifier is a data packet identifier allocated by the access network device.

Optionally, the access network device is an access network device corresponding to an access network device identifier, the access network device identifier is determined based on the first data packet identifier of the fourth data and a fifth mapping relationship, and the fifth mapping relationship is a mapping relationship between at least one first data packet identifier and at least one access network device identifier.

FIG. 19 shows a data transmission apparatus 1900 according to an embodiment of this application. The apparatus 1900 may be the core network element shown in any one of FIG. 4 to FIG. 12. The apparatus may use a hardware architecture shown in FIG. 19. The apparatus may include a processor 1910 and a transceiver 1930. The transceiver may include a transmitter and/or a receiver. Optionally, the apparatus may further include a memory 1940. The processor 1910, the transceiver 1930, and the memory 1940 communicate with each other by using an internal connection path. Related functions implemented by the processing module 1820 in FIG. 18 may be implemented by the processor 1910. Related functions implemented by the transceiver module 1810 may be implemented by the processor 1910 by controlling the transceiver 1930.

Optionally, the processor 1910 may be a CPU, a microprocessor, an ASIC, a dedicated processor, or one or more integrated circuits configured to perform the technical solutions in the embodiments of this application. Alternatively, the processor may be one or more devices, circuits, and/or processing cores for processing data (for example, computer program instructions). For example, the processor may be a baseband processor or a central processing unit. The baseband processor may be configured to process a communication protocol and communication data, and the central processing unit may be configured to: control a data transmission apparatus (for example, a core network element or a chip), execute a software program, and process data of the software program.

Optionally, the processor 1910 may include one or more processors, for example, include one or more CPUs. When the processor is one CPU, the CPU may be a single-core CPU or a multi-core CPU.

The transceiver 1930 is configured to: send and receive data and/or a signal, and receive data and/or a signal. The transceiver may include a transmitter and a receiver. The transmitter is configured to send data and/or a signal, and the receiver is configured to receive data and/or a signal.

The memory 1940 includes but is not limited to a RAM, a ROM, an EPROM, and a CD-ROM. The memory 1940 is configured to store related instructions and data.

The memory 1940 is configured to store program code and data of the core network element, and may be a separate device or integrated into the processor 1910.

Specifically, the processor 1910 is configured to control the transceiver to perform information transmission with an access network device or an application server. For details, refer to the descriptions in the foregoing method embodiments. Details are not described herein again.

During specific implementation, in an embodiment, the apparatus 1900 may further include an output device and an input device. The output device communicates with the processor 1910, and may display information in a plurality of manners. For example, the output device may be an LCD, an LED display device, a CRT display device, or a projector. The input device communicates with the processor 1910, and may receive an input from a user in a plurality of manners. For example, the input device may be a mouse, a keyboard, a touchscreen device, or a sensing device.

It may be understood that FIG. 19 shows merely a simplified design of the data transmission apparatus. During actual application, the apparatus may further include other necessary components, including but not limited to any quantity of transceivers, processors, controllers, memories, and the like, and all core network elements that can implement this application shall fall within the protection scope of this application.

In a possible design, the apparatus 1900 may be a chip, for example, may be a communication chip that can be used in the core network element, and configured to implement a related function of the processor 1910 in the core network element. The chip may be a field programmable gate array, a dedicated integrated chip, a system chip, a central processing unit, a network processor, a digital signal processing circuit, or a microcontroller for implementing a related function, or may be a programmable controller or another integrated chip. Optionally, the chip may include one or more memories, configured to store program code. When the code is executed, the processor is enabled to implement a corresponding function.

An embodiment of this application further provides an apparatus. The apparatus may be a core network element or a circuit. The apparatus may be configured to perform an action performed by the core network element in the foregoing method embodiments.

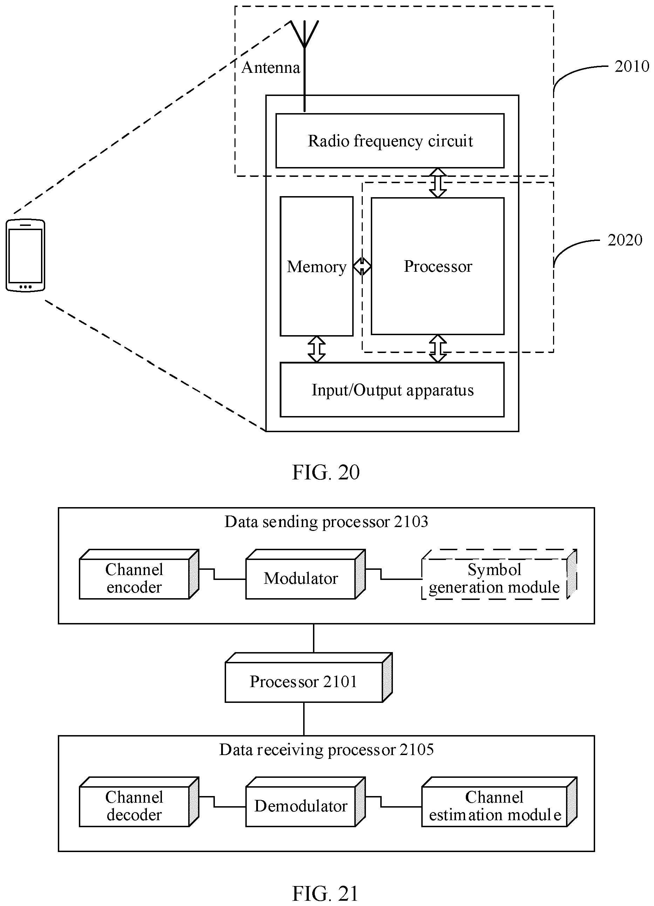

Optionally, when the apparatus in this embodiment is a terminal, FIG. 20 is a schematic diagram of a structure of a simplified terminal. For ease of understanding and illustration, an example in which the terminal is a mobile phone is used in FIG. 20. As shown in FIG. 20, the terminal includes a processor, a memory, a radio frequency circuit, an antenna, and an input/output apparatus. The processor is mainly configured to: process a communication protocol and communication data, control the terminal, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to send and receive a radio frequency signal in an electromagnetic wave form. The input/output apparatus, such as a touchscreen, a display screen, and a keyboard, is mainly configured to: receive data input by a user and output data to the user. It should be noted that terminals of some types may not have the input/output apparatus.

When data needs to be sent, the processor performs baseband processing on to-be-sent data, and outputs a baseband signal to the radio frequency circuit. After performing radio frequency processing on the baseband signal, the radio frequency circuit sends a radio frequency signal in an electromagnetic wave form through the antenna. When data is sent to the terminal, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 20 shows only one memory and one processor. In an actual terminal product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have a transceiver function may be considered as a transceiver unit of the terminal, and the processor having a processing function may be considered as a processing unit of the terminal. As shown in FIG. 20, the terminal includes a transceiver unit 2010 and a processing unit 2020. The transceiver unit may also be referred to as a transceiver, a transceiver, a transceiver apparatus, or the like. The processing unit may also be referred to as a processor, a processing board, a processing module, a processing apparatus, or the like. Optionally, a component for implementing a receiving function in the transceiver unit 2010 may be considered as a receiving unit, and a component for implementing a sending function in the transceiver unit 2010 may be considered as a sending unit. In other words, the transceiver unit 2010 includes the receiving unit and the sending unit. The transceiver unit may also be sometimes referred to as a transceiver, a transceiver, a transceiver circuit, or the like. The receiving unit may also be sometimes referred to as a receiver, a receiver, a receiver circuit, or the like. The sending unit may also be sometimes referred to as a transmitter, a transmitter, a transmitter circuit, or the like.

It should be understood that the transceiver unit 2010 is configured to perform a sending operation and a receiving operation on a terminal side in the foregoing method embodiments, and the processing unit 2020 is configured to perform an operation other than the sending and receiving operations of the terminal in the foregoing method embodiments.

For example, in an implementation, the processing unit 2020 is configured to perform the processing step 401 on the terminal side. The transceiver unit 2010 is configured to perform sending and receiving operations in step 401, step 402, and/or step 403 in FIG. 4, and/or the transceiver unit 2010 is further configured to perform other sending and receiving steps on the terminal side in the embodiments of this application. Alternatively, the processing unit 2020 is configured to perform processing steps on the terminal side. The transceiver unit 2010 is configured to perform sending and receiving operations in step 1201 in FIG. 12, and/or the transceiver unit 2010 is further configured to perform other sending and receiving steps on the terminal side in the embodiments of this application.

When the communication apparatus is a chip, the chip includes a transceiver unit and a processing unit. The transceiver unit may be an input/output circuit or a communication interface. The processing unit is a processor, a microprocessor, or an integrated circuit that is integrated on the chip.

Optionally, when the apparatus is a terminal, reference may be further made to the device shown in FIG. 21. In an example, the device can implement a function similar to that of the processor 2010 in FIG. 20. In FIG. 21, the device includes a processor 2101, a data sending processor 2103, and a data receiving processor 2105. The processing module in the foregoing embodiment may be the processor 2101 in FIG. 21, and implements a corresponding function. The transceiver module 1310 or the transceiver module 1810 in the foregoing embodiment may be the data receiving processor 2105 or the data sending processor 2103 in FIG. 21. Although FIG. 21 shows a channel encoder and a channel decoder, it may be understood that the modules are merely examples, and do not constitute a limitation on this embodiment.

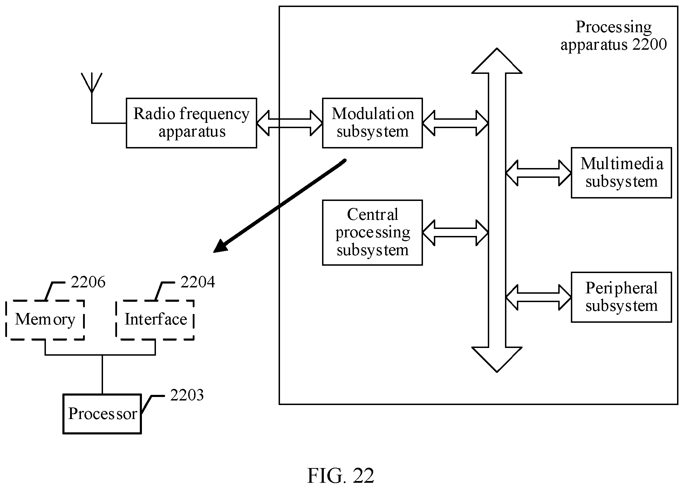

FIG. 22 shows another form of the terminal according to this embodiment. A processing apparatus 2200 includes modules such as a modulation subsystem, a central processing subsystem, and a peripheral subsystem. The communication device in the embodiments may be used as the modulation subsystem in the processing apparatus. Specifically, the modulation subsystem may include a processor 2203 and an interface 2204. The processor 2203 implements a function of the processing module 1320 or the processing module 1820, and the interface 2204 implements a function of the transceiver module 1310 or the transceiver module 1810. In another variant, the modulation subsystem includes a memory 2206, a processor 2203, and a program that is stored in the memory and that is executable on the processor. When executing the program, the processor implements the method according to one of Embodiment 1 to Embodiment 5. It should be noted that the memory 2206 may be a nonvolatile memory, or may be a volatile memory. The memory 2206 may be located in the modulation subsystem, or may be located in the processing apparatus 2200, provided that the memory 2206 can be connected to the processor 2203.

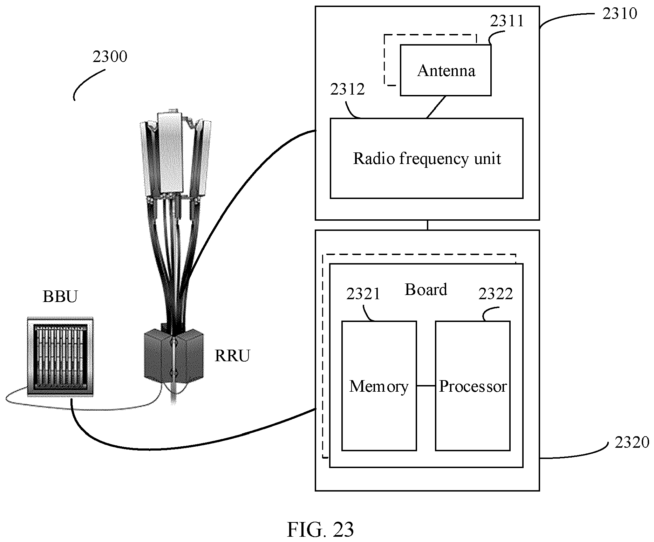

When the apparatus in this embodiment is an access network device, the access network device may be that shown in FIG. 23. An apparatus 2300 includes one or more radio frequency units, such as a remote radio unit (remote radio unit, RRU) 2310 and one or more baseband units (baseband units, BBUs) (which may also be referred to as digital units, digital units, DUs) 2320. The RRU 2310 may be referred to as a transceiver module, and corresponds to the receiving module and the sending module. Optionally, the transceiver module may also be referred to as a transceiver, a transceiver circuit, a transceiver, or the like, and may include at least one antenna 2311 and a radio frequency unit 2312. The RRU 2310 is mainly configured to: receive/send a radio frequency signal, and perform conversion between a radio frequency signal and a baseband signal. For example, the RRU 2310 is configured to send indication information to a terminal device. The BBU 2310 is mainly configured to: perform baseband processing, control the base station, and so on. The RRU 2310 and the BBU 2320 may be physically disposed together, or may be physically separated, namely, a distributed base station.

The BBU 2320 is a control center of the base station, and may also be referred to as a processing module. The BBU 2320 may correspond to the processing module 920 in FIG. 9, and is mainly configured to implement a baseband processing function, for example, channel coding, multiplexing, modulation, and frequency spread. For example, the BBU (the processing module) may be configured to control the base station to perform an operation procedure related to the access network device in the foregoing method embodiments, for example, generate the foregoing indication information.

In an example, the BBU 2320 may include one or more boards, and a plurality of boards may jointly support a radio access network (such as an LTE network) having a single access standard, or may separately support radio access networks (such as an LTE network, a 5G network, or another network) having different access standards. The BBU 2320 further includes a memory 2321 and a processor 2322. The memory 2321 is configured to store necessary instructions and data. The processor 2322 is configured to control the base station to perform a necessary action, for example, configured to control the base station to perform an operation procedure related to the access network device in the foregoing method embodiments. The memory 2321 and the processor 2322 may serve one or more boards. In other words, the memory and the processor may be independently disposed on each board. Alternatively, a plurality of boards may share a same memory and a same processor. In addition, a necessary circuit may further be disposed on each board.

In addition, the access network device is not limited to the foregoing forms, and may also be in another form. For example, the access network device includes a BBU and an adaptive radio unit (adaptive radio unit, ARU), or includes a BBU and an active antenna unit (active antenna unit, AAU), or may be customer premises equipment (customer premises equipment, CPE), or may be in another form. This is not limited in this application.

In another form of this embodiment, a computer-readable storage medium is provided. The computer-readable storage medium stores instructions. When the instructions are executed, the methods in the foregoing method embodiments are performed.

In another form of this embodiment, a computer program product including instructions is provided. When the instructions are executed, the methods in the foregoing method embodiments are performed.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, and microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid state disk, SSD)), or the like.

It should be understood that, the processor may be an integrated circuit chip, and has a signal processing capability. In an implementation process, the steps in the foregoing method embodiments may be completed by using a hardware integrated logic circuit in the processor, or by using instructions in a form of software. The foregoing processor may be a general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, or a discrete hardware component. The processor may implement or perform the method, the steps, and logical block diagrams that are disclosed in the embodiments of this application. The general-purpose processor may be a microprocessor, or the processor may be any conventional processor or the like. Steps of the method disclosed with reference to the embodiments of this application may be directly executed and accomplished by a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in a memory, and the processor reads information in the memory and completes the steps in the foregoing methods in combination with the hardware of the processor.

It may be understood that the memory in the embodiments of this application may be a volatile memory or a nonvolatile memory, or may include a volatile memory and a nonvolatile memory. The nonvolatile memory may be a ROM, a PROM, an EPROM, an EEPROM, or a flash memory. The volatile memory may be a RAM and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchronous link DRAM, SLDRAM), and a direct rambus random access memory (direct rambus RAM, DR RAM).

In this application, "at least one" means one or more, and "a plurality of' means two or more. The term "and/or" describes an association relationship between associated objects and represents that three relationships may exist. For example, A and/or B may represent the following cases: Only A exists, both A and B exist, and only B exists, where A and B may be singular or plural. The character "/" usually indicates an "or" relationship between the associated objects. "At least one item (piece) of the following" or a similar expression thereof means any combination of these items, including any combination of singular items (pieces) or plural items (pieces). For example, at least one (piece) of a, b, or c may represent: a, b, c; a and b; a and c; b and c; or a, b, and c; where a, b, and c may be singular or plural.

It should be understood that "one embodiment" or "an embodiment" mentioned in the entire specification means that particular features, structures, or characteristics related to the embodiment are included in at least one embodiment of this application. Therefore, "in one embodiment" or "in an embodiment" that appears throughout the specification does not necessarily mean a same embodiment. In addition, these particular features, structures, or characteristics may be combined in one or more embodiments in any appropriate manner. It should be understood that sequence numbers of the foregoing processes do not mean execution orders in various embodiments of this application. The execution orders of the processes should be determined based on functions and internal logic of the processes, and should not be construed as any limitation on the implementation processes of the embodiments of this application.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As shown in figures, both a computing device and an application that runs on a computing device may be components. One or more components may reside within a process and/or a thread of execution, and a component may be located on one computer and/or distributed between two or more computers. In addition, these components may be executed from various computer-readable media that store various data structures. For example, the components may perform communication by using a local and/or remote process and based on, for example, a signal having one or more data packets (for example, data from two components interacting with another component in a local system, a distributed system, and/or across a network such as the Internet interacting with other systems by using the signal).

It should be further understood that "first", "second", and various numerical symbols in this specification are merely used for distinguishing for ease of description, and are not used to limit the scope of the embodiments of this application.

It should be understood that the term "and/or" in this specification describes only an association relationship between associated objects and represents that three relationships may exist. For example, A and/or B may represent the following three cases: Only A exists, both A and B exist, and only B exists. When only A or only B exists, a quantity of A or B is not limited. In an example in which only A exists, it may be understood as that there is one or more A.

A person of ordinary skill in the art may be aware that, with reference to the examples described in the embodiments disclosed in this specification, units and algorithm steps can be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that for the purpose of convenient and brief description, for detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, the unit division is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions in the embodiments.

In addition, functional units in the embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, an access network device, or the like) to perform all or some of the steps of the methods described in the embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, wherein the method is applied to a terminal or a chip in the terminal, and the method comprises:
obtaining slice information, wherein the slice information is slice information of a slice corresponding to data;
sending the data to an access network device; and
sending indication information to the access network device, wherein the indication information is used to indicate the slice corresponding to the data.

2. The method according to claim 1, wherein the indication information comprises the slice information of the slice corresponding to the data.

3. The method according to claim 1 or 2, wherein the method further comprises:
receiving resource information from the access network device, wherein the resource information is used to indicate an uplink resource of the terminal, and the resource information is encrypted resource information; and
obtaining, based on a first key, the uplink resource indicated by the resource information; and
the sending the data to an access network device comprises:
sending the data to the access network device on the uplink resource.

4. The method according to any one of claims 1 to 3, wherein the method further comprises:
sending an identification code of the terminal to the access network device, wherein the identification code corresponds to the uplink resource of the terminal.

5. A data transmission method, wherein the method is applied to an access network device or a chip in the access network device, and the method comprises:
receiving first data from a terminal;
determining a first tunnel based on a first mapping relationship and a first slice, wherein the first mapping relationship is a mapping relationship between at least one slice and at least one tunnel, the at least one tunnel is a tunnel between the access network device and a core network element, and the first slice is a slice corresponding to the first data; and
sending the first data to the core network element through the first tunnel.

6. The method according to claim 5, wherein the receiving first data from a terminal comprises:
receiving the first data from the terminal on a first resource, wherein
that the first slice is a slice corresponding to the first data is specifically that the first slice is determined based on a second mapping relationship and the first resource, and the second mapping relationship is a mapping relationship between at least one resource and at least one slice.

7. The method according to claim 5, wherein the method further comprises:
receiving indication information, wherein the indication information is used to indicate the first slice corresponding to the first data, and
that the first slice is a slice corresponding to the first data is specifically that the first slice is determined based on the indication information.

8. The method according to any one of claims 5 to 7, wherein the method further comprises:
sending first resource information to a first network element, wherein the first resource information is used to indicate an uplink resource of the terminal;
receiving second resource information from the first network element, wherein the second resource information is obtained after the first network element encrypts the first resource information; and
sending the second resource information to the terminal.

9. The method according to any one of claims 5 to 7, wherein the method further comprises:
receiving a key; and
sending resource information to the terminal, wherein the resource information is used to indicate an uplink resource of the terminal, and the resource information is resource information encrypted by using the key.

10. The method according to any one of claims 5 to 7, wherein the method further comprises:
receiving a first identification code from the terminal;
obtaining an identification code list, wherein the identification code list comprises at least one identification code; and
when the identification code list comprises the first identification code, sending resource information to the terminal, wherein the resource information is used to indicate an uplink resource of the terminal.

11. The method according to any one of claims 5 to 10, wherein the method further comprises:
receiving second data within a preset time interval, wherein the second data corresponds to the first slice; and
the sending the first data to the core network element through the first tunnel comprises:
simultaneously sending the first data and the second data through the first tunnel when the preset time interval expires.

12. The method according to any one of claims 5 to 11, wherein the method further comprises:
receiving third data, wherein a first data packet identifier of the third data is the same as a first data packet identifier of the first data, and the first data packet identifier is a data packet identifier allocated by the access network device; and
sending the third data to the terminal, wherein the terminal is a terminal corresponding to a first terminal identifier, the first terminal identifier is determined based on the first data packet identifier of the third data and a third mapping relationship, and the third mapping relationship is a mapping relationship between at least one first data packet identifier and at least one terminal identifier.

13. The method according to any one of claims 5 to 11, wherein the method further comprises:
receiving third data; and
sending the third data to the terminal, wherein a source address of the third data is a destination address of the first data, and a destination address of the third data is a source address of the first data.

14. A data transmission method, wherein the method is applied to a core network element or a chip in the core network element, and the method comprises:
receiving first data from an access network device through a first tunnel, wherein the first data corresponds to a first slice, the first tunnel is determined based on the first slice and a first mapping relationship, and the first mapping relationship is a mapping relationship between at least one slice and at least one tunnel between the access network device and the core network element; and
sending the first data to an application server through a second tunnel, wherein the second tunnel is determined based on the first slice and a fourth mapping relationship, and the fourth mapping relationship is a mapping relationship between at least one slice and at least one tunnel between the core network element and at least one application server.

15. The method according to claim 14, wherein the method further comprises:
receiving fourth data from the application server; and
sending the fourth data to the access network device through a third tunnel, wherein when a source address of the fourth data is a destination address of the first data and a destination address of the fourth data is a source address of the first data, the first tunnel is the third tunnel; or when a first data packet identifier of the fourth data is the same as a first data packet identifier of the first data, the first tunnel is the third tunnel, and the first data packet identifier is a data packet identifier allocated by the access network device.

16. A data transmission apparatus, comprising:
a processing module, configured to obtain slice information, wherein the slice information is slice information of a slice corresponding to data; and
a transceiver module, configured to send the data to an access network device, wherein
the transceiver module is further configured to send indication information to the access network device, wherein the indication information is used to indicate the slice corresponding to the data.

17. The apparatus according to claim 16, wherein the indication information comprises the slice information of the slice corresponding to the data.

18. The apparatus according to claim 16 or 17, wherein the transceiver module is further configured to receive resource information from the access network device, wherein the resource information is used to indicate an uplink resource of the terminal, and the resource information is encrypted resource information;
the processing module is further configured to obtain, based on a first key, the uplink resource indicated by the resource information; and
the transceiver module is specifically configured to:
send the data to the access network device on the uplink resource.

19. The apparatus according to any one of claims 16 to 18, wherein the transceiver module is further configured to send an identification code of the terminal to the access network device, wherein the identification code corresponds to the uplink resource of the terminal.

20. A data transmission apparatus, comprising:
a transceiver module, configured to receive first data from a terminal; and
a processing module, configured to determine a first tunnel based on a first mapping relationship and a first slice, wherein the first mapping relationship is a mapping relationship between at least one slice and at least one tunnel, the at least one tunnel is a tunnel between the access network device and a core network element, and the first slice is a slice corresponding to the first data, wherein
the transceiver module is further configured to send the first data to the core network element through the first tunnel.

21. The apparatus according to claim 20, wherein the transceiver module is specifically configured to:
receive the first data from the terminal on a first resource, wherein
that the first slice is a slice corresponding to the first data is specifically that the first slice is determined based on a second mapping relationship and the first resource, and the second mapping relationship is a mapping relationship between at least one resource and at least one slice.

22. The apparatus according to claim 20, wherein the transceiver module is further configured to receive indication information, wherein the indication information is used to indicate the first slice corresponding to the first data; and
that the first slice is a slice corresponding to the first data is specifically that the first slice is determined based on the indication information.

23. The apparatus according to any one of claims 20 to 22, wherein the transceiver module is further configured to:
send first resource information to a first network element, wherein the first resource information is used to indicate an uplink resource of the terminal;
receive second resource information from the first network element, wherein the second resource information is obtained after the first network element encrypts the first resource information; and
send the second resource information to the terminal.

24. The apparatus according to any one of claims 20 to 22, wherein the transceiver module is further configured to:
receive a key; and
send resource information to the terminal, wherein the resource information is used to indicate an uplink resource of the terminal, and the resource information is resource information encrypted by using the key.

25. The apparatus according to any one of claims 20 to 22, wherein the transceiver module is further configured to receive a first identification code from the terminal;
the processing module is further configured to obtain an identification code list, wherein the identification code list comprises at least one identification code; and
the transceiver module is further configured to: when the identification code list comprises the first identification code, send resource information to the terminal, wherein the resource information is used to indicate an uplink resource of the terminal.

26. The apparatus according to any one of claims 20 to 25, wherein the transceiver module is further configured to receive second data within a preset time interval, wherein the second data corresponds to the first slice; and
the transceiver module is specifically configured to:
simultaneously send the first data and the second data through the first tunnel when the preset time interval expires.

27. The apparatus according to any one of claims 20 to 26, wherein the transceiver module is further configured to:
receive third data, wherein a first data packet identifier of the third data is the same as a first data packet identifier of the first data, and the first data packet identifier is a data packet identifier allocated by the access network device; and
send the third data to the terminal, wherein the terminal is a terminal corresponding to a first terminal identifier, the first terminal identifier is determined based on the first data packet identifier of the third data and a third mapping relationship, and the third mapping relationship is a mapping relationship between at least one first data packet identifier and at least one terminal identifier.

28. The apparatus according to any one of claims 20 to 26, wherein the transceiver module is further configured to:
receive third data; and
send the third data to the terminal, wherein a source address of the third data is a destination address of the first data, and a destination address of the third data is a source address of the first data.

29. A data transmission apparatus, comprising:
a transceiver module, configured to receive first data from an access network device through a first tunnel, wherein the first data corresponds to a first slice, the first tunnel is determined by a processing module based on the first slice and a first mapping relationship, and the first mapping relationship is a mapping relationship between at least one slice and at least one tunnel between the access network device and the core network element; and
the transceiver module is further configured to send the first data to an application server through a second tunnel, wherein the second tunnel is determined by the processing module based on the first slice and a fourth mapping relationship, and the fourth mapping relationship is a mapping relationship between at least one slice and at least one tunnel between the core network element and at least one application server.

30. The apparatus according to claim 29, wherein the transceiver module is further configured to:
receive fourth data from the application server; and
send the fourth data to the access network device through a third tunnel, wherein when a source address of the fourth data is a destination address of the first data and a destination address of the fourth data is a source address of the first data, the first tunnel is the third tunnel; or when a first data packet identifier of the fourth data is the same as a first data packet identifier of the first data, the first tunnel is the third tunnel, and the first data packet identifier is a data packet identifier allocated by the access network device.

31. A computer-readable storage medium, wherein the computer-readable storage medium comprises a computer program or instructions; and when the computer program or the instructions is/are run on a computer, the computer is enabled to perform the method according to any one of claims 1 to 15.

32. A computer program product, wherein the computer program product comprises a computer program or instructions; and when the computer program or the instructions is/are run on a computer, the computer is enabled to perform the method according to any one of claims 1 to 15.
